# EUROPEAN PATENT APPLICATION

(11) **EP 3 770 224 A1**
(43) Date of publication of application: **27.01.2021**
(21) Application number: 18911212.1
(22) Date of filing: 20.03.2018
(51) Int. Cl.: C09D 11/30, C09D 11/101

(54) **INK**

(71) Applicant: Kao Corporation, Chuo-ku, Tokyo 103-8210 (JP)
(72) Inventor: YOSHIDA, Tomohide, Wakayama-shi, Wakayama 640-8580 (JP); TAKENO, Hirotaka, Wakayama-shi, Wakayama 640-8580 (JP); TAKIZAWA, Nobuyuki, Wakayama-shi, Wakayama 640-8580 (JP)
(74) Representative: Hoffmann Eitle
(86) International application number: PCT/JP2018/011188
(87) International publication number: WO 2019/180847

(57) **Abstract**

The present invention relates to an ink that is cured by irradiation with an active energy ray and contains not less than 8.5% by mass and not more than 65% by mass of a water-based medium, not less than 30% by mass of a water-soluble active energy ray-polymerizable monomer (i) and a pigment that is dispersed in the ink with a polymer dispersant (a); a process for producing the ink; and an ink-jet printing method using the ink.

## Description

### FIELD OF THE INVENTION

The present invention relates to an ink, a process for producing the ink, and an ink-jet printing method using the ink.

### BACKGROUND OF THE INVENTION

In ink-jet printing methods, droplets of ink are directly ejected onto a printing medium from very fine nozzles and allowed to adhere to the printing medium to obtain a printed material on which characters or images are printed, etc. The ink-jet printing methods have become rapidly spread because of various advantages such as easiness of full coloration, low cost, capability of using a plain paper as the printing medium, non-contact with a medium to be printed, etc. In addition, in the application fields such as printing on packages for goods or commercial label printing used for advertisements, etc., a solvent-based ink or a UV-curing ink, etc., have been conventionally used to print characters or images on a printing medium formed of a resin such as polyethylene terephthalate, polyvinyl chloride, polyethylene, polypropylene, nylon and the like. However, from the standpoints of reducing burdens on environments, saving energy consumed, ensuring safety, etc., it has been required that an ink-jet printing method is utilized as a printing method using water-based inks.

For example, JP 2011-195737A (Patent Literature 1) discloses a UV-curing aqueous ink composition that is capable of exhibiting good ejection properties, etc., when applied to an ink-jet printing method, an ink-jet image-forming method using the ink composition, and the like, and more specifically discloses a UV-curing aqueous ink composition that contains a water-based medium, a compound having an ethylenically unsaturated bond and an ionic composition containing a water-soluble polymer compound and a photopolymerization initiator in which the ionic composition has water solubility, an ink-jet image-forming method using the ink composition, and the like.

JP 2011-116949A (Patent Literature 2) discloses an aqueous liquid composition that can be cured by irradiation with an active energy ray and can also be used as a colorant-containing ink, and further is excellent in stability and capable of forming a uniform film, an ink-jet printing method using the liquid composition, and the like, and more specifically discloses an aqueous liquid composition that contains a water-soluble monomer, a photopolymerization initiator and an aqueous medium, and may further contain a polymer emulsion, in which the water-soluble monomer has two or more ethylenically unsaturated bonds and is such a monomer that can be cured with an active energy ray, an ink-jet printing method using the liquid composition, and the like. In the Patent Literature 2, it is also described that a UV irradiator is used as a means for irradiating the active energy ray.

### SUMMARY OF THE INVENTION

The present invention relates to an ink that is cured by irradiation with an active energy ray, and contains not less than 8.5% by mass and not more than 65% by mass of a water-based medium, not less than 30% by mass of a water-soluble active energy ray-polymerizable monomer (i) and a pigment that is dispersed in the ink with a polymer dispersant (a).

### DETAILED DESCRIPTION OF THE INVENTION

However, in the technologies described in the Patent Literatures 1 and 2, since the configuration of droplets of the ink when adhering the ink onto the printing medium is directly reflected on a printed surface of the printing medium formed by irradiating an ultraviolet ray to the ink adhered onto the printing medium, irregularities tend to be formed on the printed surface, so that it tends to be difficult to attain high gloss of characters or images printed. In addition, the inks used in the Patent Literatures 1 and 2 tend to hardly exhibit sufficient dispersion stability of the pigment therein and also tend to fail to maintain low viscosity thereof, so that it tends to be sometimes difficult to ensure good ejection stability of the inks.

The present invention relates to an ink that is excellent in ejection stability, and is capable of providing a printed material having high gloss, a process for producing the ink, and an ink-jet printing method using the ink.

The present inventors have found that by using an ink that is cured by irradiation with an active energy ray, and contains a specific amount of a water-based medium, a specific amount of a water-soluble active energy ray-polymerizable monomer and a pigment that is dispersed in the ink with a polymer dispersant, it is possible to impart excellent ejection stability to the ink and obtain a printed material having high gloss.

That is, the present invention relates to the following aspects [1] to [3].
[1] An ink that is cured by irradiation with an active energy ray, containing:
   not less than 8.5% by mass and not more than 65% by mass of a water-based medium;
   not less than 30% by mass of a water-soluble active energy ray-polymerizable monomer (i); and
   a pigment that is dispersed in the ink with a polymer dispersant (a).
[2] A process for producing an ink that is cured by irradiation with an active energy ray and contains not less than 8.5% by mass and not more than 65% by mass of a water-based medium and not less than 30% by mass of a water-soluble active energy ray-polymerizable monomer (i), said process including the following step 1:
   Step 1: mixing a water-based pigment dispersion (A) prepared by dispersing a pigment in the water-based medium with a polymer dispersant (a), and the water-soluble active energy ray-polymerizable monomer (i).
[3] An ink-jet printing method for printing characters or images on a printing medium using the ink according to the aspect [1], said method including the following steps I and II:
   Step I: allowing the ink to adhere to the printing medium in an ink-jet printing manner; and
   Step II: irradiating an active energy ray to the ink adhered to the printing medium in the step I to cure the ink.

In accordance with the present invention, it is possible to provide an ink that is excellent in ejection stability and is capable of providing a printed material having high gloss, a process for producing the ink, and an ink-jet printing method using the ink.

### [Ink]

The ink of the present invention (hereinafter also referred to merely as an "ink") is an ink that is cured by irradiation with an active energy ray, and contains not less than 8.5% by mass and not more than 65% by mass of a water-based medium, not less than 30% by mass of a water-soluble active energy ray-polymerizable monomer (i), and a pigment that is dispersed in the ink with a polymer dispersant (a).

The ink of the present invention is excellent in ejection stability, and is capable of providing a printing material having high gloss. The reason why the aforementioned advantageous effects can be attained by the present invention is considered as follows, though it is not clearly determined yet.

That is, as described above, since the configuration of droplets of the ink when allowing the ink to adhere onto the printing medium is directly reflected on a printed surface of the printing medium formed by irradiating an ultraviolet ray to the ink adhered onto the printing medium by an ink-jet printing method, irregularities tend to be formed on the printed surface, and irregular reflection of light tends to be generated on the thus formed irregularities, thereby causing deterioration in gloss of the printed surface.

The ink of the present invention contains a specific amount of the water-based medium and a specific amount of the water-soluble active energy ray-polymerizable monomer (i). For this reason, it is considered that the droplets of the ink adhered onto the printing medium are adequately smoothened therebetween, and when irradiating an active energy ray to the ink, polymerization of the aforementioned polymerizable monomer (i) is allowed to proceed while evaporating the water-based medium contained in the ink, so that the printed surface is prevented from suffering from formation of irregularities, and can exhibit high gloss. In addition, since the ink of the present invention contains the pigment that is dispersed in the ink with the polymer dispersant (a) and further contains a specific amount of the water-soluble active energy ray-polymerizable monomer, it is considered that the ink can be prevented from suffering from increase in viscosity thereof upon concentration of the ink, and can also be improved in ejection stability.

### <Water-Based Medium>

The water-based medium used in the present invention preferably contains water as a main component. From the viewpoint of improving dispersion stability of the pigment as well as from the viewpoint of improving environmental suitability of the resulting ink, the content of water in the water-based medium is preferably not less than 70% by mass, more preferably not less than 80% by mass, even more preferably not less than 90% by mass and further even more preferably not less than 95% by mass, and is also not more than 100% by mass, and furthermore preferably 100% by mass. As the water, pure water or ultrapure water such as ion-exchanged water, distilled water, etc., is preferably used. Examples of components other than water which may be contained in the water-based medium include water-soluble organic solvents, e.g., alkyl alcohols having not less than 1 and not more than 5 carbon atoms; dialkyl ketones having a total carbon number of not less than 3 and not more than 5, such as acetone, methyl ethyl ketone, etc.; cyclic ethers such as tetrahydrofuran, etc.; and the like. The boiling point of the respective organic solvents is preferably not higher than 150°C, more preferably not higher than 130°C and even more preferably not higher than 110°C.

### <Water-Soluble Active Energy Ray-Polymerizable Monomer (i)>

The water-soluble active energy ray-polymerizable monomer (i) used in the present invention (hereinafter also referred to merely as a "polymerizable monomer (i)") is in the form of a water-soluble monomer containing a reactive group that can be polymerized by irradiation with an active energy ray (hereinafter also referred to merely as a "reactive group").

The term "water-soluble" of the polymerizable monomer (i) as used herein means that a solubility in water of the polymerizable monomer (i) as measured by dissolving the monomer in 100 g of ion-exchanged water at 25°C until reaching a saturation concentration thereof is not less than 10 g. The solubility in water of the polymerizable monomer (i) is preferably not less than 50 g.

In addition, the molecular weight of the polymerizable monomer (i) is preferably not less than 50, and is also preferably not more than 2,000.

The "reactive group" of the polymerizable monomer (i) as used herein means a functional group that is capable of allowing polymerization of the monomer to proceed either directly or by the action of a photopolymerization initiator when irradiated with an active energy ray such as an electron beam, an ultraviolet ray, etc., so that the monomer is subjected to curing reaction. Examples of the reactive group include those functional groups having an ethylenically unsaturated bond. Specific examples of the reactive group include an acryloyl group, a methacryloyl group, a vinyl group, an allyl group and the like. Among these reactive groups, from the viewpoint of improving curability of the ink as well as from the viewpoint of improving gloss and ejection stability of the ink, preferred is at least one group selected from the group consisting of an acryloyl group and a methacryloyl group. The number of the reactive group(s) of the polymerizable monomer (i) is preferably not less than 1, and is also preferably not more than 6, more preferably not more than 4, even more preferably not more than 3, further even more preferably not more than 2 and still further even more preferably 1, from the viewpoint of improving ejection stability and gloss of the ink.

The polymerizable monomer (i) preferably further contains, in addition to the aforementioned reactive group, one or more functional groups for imparting good water solubility to the monomer, such as a hydroxy group, a polyalkyleneoxy group, an ether group, an ionic group, an amide group, an amino group and the like, from the viewpoint of improving ejection stability and gloss of the ink.

Specific examples of the polymerizable monomer (i) include hydroxyalkyl (meth)acrylates; alkyleneoxide-modified glycerin tri(meth)acrylates; polyethylene glycol (n = 2 to 30 wherein n represents an average molar number of addition of ethyleneoxide: in the present specification, the symbol n described hereinafter also represents the average molar number of addition of an alkyleneoxide) (meth)acrylate; alkoxy polyalkylene glycol (meth)acrylates such as methoxy polyethylene glycol (n = 1 to 30) (meth)acrylate, etc.; phenoxy (ethylene glycol/propylene glycol copolymer) (n = 1 to 30 in which n for ethylene glycol: n = 1 to 29) (meth)acrylate; alkyleneoxide adducts (n = 1 to 30) of allyl alcohol; trimethylolpropane triacrylate and alkyleneoxide adducts (n = 1 to 30) thereof; pentaerythritol (meth)acrylate and alkyleneoxide adducts (n = 1 to 30) thereof (meth)acrylamides such as *N,N*-dimethylaminoethyl (meth)acrylate, *N*,*N-*dimethyl (meth)acrylamide, *N-*methoxymethyl (meth)acrylamide, *N-*hydroxymethyl (meth)acrylamide, etc.; acryloyl morpholine; and the like. These polymerizable monomers (i) may be use alone or in combination of any two or more thereof.

Incidentally, the term "(meth)acrylate" as used in the present invention means at least one compound selected from the group consisting of an acrylate and a methacrylate.

As the polymerizable monomer (i), from the viewpoint of improving ejection stability and gloss of the ink, preferred is a (meth)acrylate containing at least one group selected from the group consisting of a hydroxy group and a polyalkyleneoxy group, more preferred is a (meth)acrylate containing a hydroxy group, and even more preferred is an acrylate containing a hydroxy group.

The hydroxy group-containing (meth)acrylate is preferably a hydroxyalkyl (meth)acrylate. The number of carbon atoms of an alkyl group of the hydroxyalkyl (meth)acrylate is preferably not less than 1, and is also preferably not more than 10, more preferably not more than 6, even more preferably not more than 3 and further even more preferably not more than 2. The alkyl group may be either a linear alkyl group, a branched alkyl group or a cyclic alkyl group. Among these hydroxy group-containing (meth)acrylates, preferred is at least one compound selected from the group consisting of 2-hydroxyethyl (meth)acrylate and 3-hydroxypropyl (meth)acrylate, more preferred is 2-hydroxyethyl (meth)acrylate, and even more preferred is 2-hydroxyethyl acrylate.

### <Pigment>

The pigment used in the present invention may be either an inorganic pigment or an organic pigment, and may also be used in the form of a lake pigment or a fluorescent pigment. In addition, the pigment may also be used in combination with an extender pigment, if required.

Specific examples of the inorganic pigment include carbon blacks, metal oxides such as titanium oxide, iron oxide, red iron oxide, chromium oxide, etc., pearlescent pigments and the like. In particular, the carbon blacks are preferably used for black inks. Examples of the carbon blacks include furnace blacks, thermal lamp blacks, acetylene blacks, channel blacks and the like.

Specific examples of the organic pigment include azo pigments such as azo lake pigments, insoluble monoazo pigments, insoluble disazo pigments, chelate azo pigments, etc.; polycyclic pigments such as phthalocyanine pigments, perylene pigments, perinone pigments, anthraquinone pigments, quinacridone pigments, dioxazine pigments, thioindigo pigments, isoindolinone pigments, quinophthalone pigments, diketopyrrolopyrrole pigments, benzimidazolone pigments, threne pigments, etc.; and the like.

The hue of the pigment is not particularly limited, and there may be used any of achromatic color pigments having a white color, a black color, a gray color, etc.; and chromatic color pigments having a yellow color, a magenta color, a cyan color, a blue color, a red color, an orange color, a green color, etc.

Specific examples of the preferred organic pigments include one or more pigments selected from the group consisting of commercially available products marketed under the names of C.I. Pigment Yellow, C.I. Pigment Red, C.I. Pigment Orange, C.I. Pigment Violet, C.I. Pigment Blue and C.I. Pigment Green with various part numbers.

Examples of the extender pigment include silica, calcium carbonate, talc and the like.

The aforementioned pigments may be used alone or in the form of a mixture of any two or more thereof.

The pigment used in the present invention is a pigment that is dispersed in the ink with the polymer dispersant (a). Examples of the configuration of the pigment dispersed with the polymer dispersant (a) which is present in the ink include the configuration in which the polymer dispersant (a) is adsorbed onto the pigment, the configuration in which the pigment is incorporated in the polymer dispersant (a), and the like. From the viewpoint of improving dispersion stability of the pigment as well as from the viewpoint of improving ejection stability and gloss of the ink, among these configurations, preferred is the configuration in which the pigment is incorporated in the polymer dispersant (a), and more preferred is the pigment-enclosing (encapsulating) configuration in which the pigment is enclosed or encapsulated in the polymer dispersant (a). More specifically, it is preferred that the pigment is contained in the form of pigment-containing polymer particles in the ink.

### <Polymer Dispersant (a)>

Examples of the polymer dispersant (a) used in the present invention include vinyl-based polymers obtained by addition-polymerizing a vinyl monomer selected from the group consisting of a vinyl compound, a vinylidene compound and a vinylene compound; condensation-based polymers such as polyesters, polyurethanes, etc.; and the like. From the viewpoint of improving dispersion stability of the pigment as well as from the viewpoint of improving ejection stability and gloss of the ink, among these polymer dispersants, preferred is at least one polymer selected from the group consisting of vinyl-based polymers and polyesters, and more preferred are vinyl-based polymers.

From the viewpoint of improving dispersion stability of the pigment as well as from the viewpoint of improving ejection stability and gloss of the ink, it is preferred that the polymer dispersant (a) contains acid groups, and it is more preferred that the acid groups are partially neutralized with a neutralizing agent. By using the aforementioned polymer dispersant (a), it is considered that since the charge repulsion force between the pigment particles which is exhibited after the neutralization becomes large, it is possible to suppress flocculation of the pigment particles in the ink and suppress increase in viscosity of the ink, so that the pigment can be improved in dispersion stability in the ink, and the resulting ink can be improved in ejection stability and gloss. Examples of the acid groups include groups that are capable of releasing hydrogen ions upon dissociation thereof to allow the polymer dispersant (a) to exhibit acidity, such as a carboxy group (-COOM), a sulfonic acid group (-SO₃M), a phosphoric acid group (-OPO₃M₂), etc., or dissociated ion forms of these groups (such as -COO⁻, -SO₃⁻, -OPO₃²⁻ and -OPO₃⁻M), and the like. In the aforementioned chemical formulae, M is a hydrogen atom, an alkali metal, ammonium or an organic ammonium. Of these polymer dispersants, from the viewpoint of improving dispersion stability of the pigment as well as from the viewpoint of improving ejection stability and gloss of the ink, preferred are those compounds containing a carboxy group.

Examples of the neutralizing agent include bases such as lithium hydroxide, sodium hydroxide, potassium hydroxide, ammonia, various amines and the like. Of these neutralizing agents, preferred is sodium hydroxide.

The neutralization degree of the acid groups of the polymer dispersant (a) is preferably not less than 10 mol%, more preferably not less than 20 mol% and even more preferably not less than 30 mol% from the viewpoint of improving ejection stability and gloss of the ink, and is also preferably not more than 90 mol%, more preferably not more than 80 mol%, even more preferably not more than 70 mol% and further even more preferably not more than 60 mol% from the same viewpoint as described above.

In the case where the polymer dispersant (a) contains the acid groups, the neutralization degree of the acid groups may be determined as an equivalent amount of the neutralizing agent used according to the following formula. When the equivalent amount of the neutralizing agent used is not more than 100 mol%, the equivalent amount of the neutralizing agent used has the same meaning as the neutralization degree of of the acid groups neutralized. On the other hand, when the equivalent amount of the neutralizing agent used which is calculated according to the following formula exceeds 100 mol%, it is meant that the neutralizing agent is present in an excessively large amount relative to the acid groups of the polymer dispersant (a), and in such a case, the neutralization degree of of the polymer dispersant (a) is regarded as being 100 mol%.

Equivalent amount (mol%) of neutralizing agent used = [{mass (g) of neutralizing agent added/equivalent amount of neutralizing agent}/[{acid value (mgKOH/g) of polymer dispersant (a) x mass (g) of polymer dispersant (a)}/(56 x 1,000)]] x 100.

### [Vinyl-Based Polymer]

The polymer dispersant (a) is preferably in the form of a vinyl-based polymer that contains a constitutional unit derived from (a-1) a carboxy group-containing monomer (hereinafter also referred to merely as a "component (a-1)") and a constitutional unit derived from (a-2) a hydrophobic monomer (hereinafter also referred to merely as a "component (a-2)"). The polymer dispersant (a) may further contain a constitutional unit derived from (a-3) a nonionic monomer (hereinafter also referred to merely as a "component (a-3)"). The aforementioned vinyl-based polymer may be produced by copolymerizing a monomer mixture that contains the carboxy group-containing monomer (a-1) and the hydrophobic monomer (a-2), and may further contain the nonionic monomer (a-3), if required (such a mixture is hereinafter also referred to merely as a "monomer mixture").

### ((a-1) Carboxy Group-Containing Monomer)

The carboxy group-containing monomer (a-1) is used as a monomer component of the polymer dispersant (a) from the viewpoint of improving dispersion stability of the pigment as well as from the viewpoint of improving ejection stability and gloss of the ink. As the carboxy group-containing monomer, there are preferably used carboxylic acid monomers.

Specific examples of the carboxylic acid monomers include acrylic acid, methacrylic acid, crotonic acid, itaconic acid, maleic acid, fumaric acid, citraconic acid, 2-methacryloyloxymethylsuccinic acid and the like. Among these carboxylic acid monomers, preferred is at least one compound selected from the group consisting of acrylic acid and methacrylic acid, and more preferred is acrylic acid.

### ((a-2) Hydrophobic Monomer)

The hydrophobic monomer (a-2) is used as a monomer component of the polymer dispersant (a) from the viewpoint of improving dispersion stability of the pigment as well as from the viewpoint of improving ejection stability and gloss of the ink.

The term "hydrophobic" as used in the present invention means that a solubility in water of the monomer as measured by dissolving the monomer in 100 g of ion-exchanged water at 25°C until reaching a saturation concentration thereof is less than 10 g. The solubility in water of the hydrophobic monomer is preferably not more than 5 g and more preferably not more than 1 g from the viewpoint of improving adsorption of the polymer dispersant onto the pigment.

The hydrophobic monomer (a-2) is preferably at least one monomer selected from the group consisting of a (meth)acrylate containing a hydrocarbon group derived from an aliphatic alcohol, and an aromatic group-containing monomer.

As the (meth)acrylate containing a hydrocarbon group derived from an aliphatic alcohol, preferred are those (meth)acrylates containing a hydrocarbon group derived from an aliphatic alcohol having not less than 1 and not more than 22 carbon atoms. Examples of the (meth)acrylates containing a hydrocarbon group derived from an aliphatic alcohol having not less than 1 and not more than 22 carbon atoms include (meth)acrylates containing a linear alkyl group, such as methyl (meth)acrylate, ethyl (meth)acrylate, propyl (meth)acrylate, butyl (meth)acrylate, pentyl (meth)acrylate, octyl (meth)acrylate, decyl (meth)acrylate, dodecyl (meth)acrylate, stearyl (meth)acrylate, etc.; (meth)acrylates containing a branched alkyl group, such as isopropyl (meth)acrylate, isobutyl (meth)acrylate, *tert*-butyl (meth)acrylate, isopentyl (meth)acrylate, isooctyl (meth)acrylate, isodecyl (meth)acrylate, isododecyl (meth)acrylate, isostearyl (meth)acrylate, 2-ethylhexyl (meth)acrylate, etc.; (meth)acrylates containing an alicyclic alkyl group, such as cyclohexyl (meth)acrylate, etc.; and the like. Of these (meth)acrylates, more preferred are those (meth)acrylates containing an alkyl group having not less than 1 and not more than 10 carbon atoms, and even more preferred are those (meth)acrylates containing an alkyl group having not less than 1 and not more than 8 carbon atoms.

The aromatic group-containing monomer is preferably a vinyl monomer containing an aromatic group having not less than 6 and not more than 22 carbon atoms which may contain a substituent group containing a hetero atom, and more preferably at least one monomer selected from the group consisting of a styrene-based monomer and an aromatic group-containing (meth)acrylate. The molecular weight of the aromatic group-containing monomer is preferably less than 500.

Examples of the styrene-based monomer include styrene, *α*-methyl styrene, 2-methyl styrene, and the like. Examples of the aromatic group-containing (meth)acrylate include benzyl (meth)acrylate, phenoxyethyl (meth)acrylate, and the like. Among these aromatic group-containing monomers, from the viewpoint of improving dispersion stability of the pigment, preferred is at least one compound selected from the group consisting of styrene, *α*-methyl styrene and benzyl (meth)acrylate, and more preferred is at least one compound selected from the group consisting of styrene and *α*-methyl styrene.

As the hydrophobic monomer (a-2), there may also be used a macromonomer. The macromonomer is in the form of a compound containing a polymerizable functional group at one terminal end thereof and having a number-average molecular weight of not less than 500 and not more than 100,000 and may be used as a monomer component of the vinyl-based polymer from the viewpoint of improving dispersion stability of the pigment. The polymerizable functional group bonded to one terminal end of the macromonomer is preferably an acryloyloxy group or a methacryloyloxy group, and more preferably a methacryloyloxy group.

The macromonomer preferably has a number-average molecular weight of not less than 1,000 and not more than 10,000. Incidentally, the number-average molecular weight may be measured by gel permeation chromatography using chloroform containing 1 mmol/L of dodecyl dimethylamine as a solvent and using polystyrenes as a reference standard substance.

As the macromonomer, from the viewpoint of improving dispersion stability of the pigment, preferred are an aromatic group-containing monomer-based macromonomer and a silicone-based macromonomer, and more preferred is an aromatic group-containing monomer-based macromonomer.

As an aromatic group-containing monomer constituting the aromatic group-containing monomer-based macromonomer, there may be mentioned the same aromatic group-containing monomers as described previously as to the aforementioned hydrophobic monomer. Among these aromatic group-containing monomers, preferred are styrene and benzyl (meth)acrylate, and more preferred is styrene.

Specific examples of commercially available products of the styrene-based macromonomer include "AS-6(S)", "AN-6(S)" and "HS-6(S)" (tradenames) all available from Toagosei Co., Ltd., and the like.

Examples of the silicone-based macromonomer include organopolysiloxanes containing a polymerizable functional group at one terminal end thereof, and the like.

### ((a-3) Nonionic Monomer)

The polymer dispersant (a) may be a vinyl-based polymer that further contains a constitutional unit derived from the nonionic monomer (a-3), in addition to the constitutional unit derived from the carboxy group-containing monomer (a-1) and the constitutional unit derived from the hydrophobic monomer (a-2), from the viewpoint of improving dispersion stability of the pigment.

From the viewpoint of improving dispersion stability of the pigment, as the nonionic monomer (a-3), preferred is at least one compound selected from the group consisting of hydroxyalkyl (meth)acrylates such as 2-hydroxyethyl (meth)acrylate, 3-hydroxypropyl (meth)acrylate, etc.; polyalkylene glycol (meth)acrylates such as polyethylene glycol (n = 2 to 30) (meth)acrylate, polypropylene glycol (n = 2 to 30) (meth) acrylate, etc.; alkoxy polyalkylene glycol (meth)acrylates such as methoxy polyethylene glycol (n = 1 to 30) (meth)acrylate, etc.; and phenoxy (ethylene glycol/propylene glycol copolymer) (n = 1 to 30 in which n for ethylene glycol: n = 1 to 29) (meth)acrylate, and more preferred are alkoxy polyalkylene glycol (meth)acrylates.

Specific examples of commercially available products of the nonionic monomer (a-3) include "NK ESTER M-20G", "NK ESTER M-40G", "NK ESTER M-90G", "NK ESTER M-230G" and the like as tradenames of products available from Shin-Nakamura Chemical Co., Ltd.; and "BLEMMER PE-90", "BLEMMER PE-200", "BLEMMER PE-350" and the like, "BLEMMER PME-100", "BLEMMER PME-200", "BLEMMER PME-400" and the like, "BLEMMER PP-500", "BLEMMER PP-800", "BLEMMER PP-1000" and the like, "BLEMMER AP-150", "BLEMMER AP-400", "BLEMMER AP-550" and the like, and "BLEMMER 50PEP-300", "BLEMMER 50POEP-800B", "BLEMMER 43PAPE-600B" and the like as tradenames of products available from NOF Corporation.

The aforementioned components (a-1) to (a-3) may be respectively used alone or in the form of a mixture of any two or more thereof.

As described above, from the viewpoint of improving ejection stability and gloss of the ink, the polymer dispersant (a) is preferably a (meth)acrylic resin containing a constitutional unit derived from at least one carboxy group-containing monomer (a-1) selected from the group consisting of acrylic acid and methacrylic acid, and a constitutional unit derived from at least one hydrophobic monomer (a-2) selected from the group consisting of an acrylate monomer, a methacrylate monomer and an aromatic group-containing monomer.

### (Contents of Respective Components in Monomer Mixture or Contents of Respective Constitutional Units in Vinyl-Based Polymer)

The contents of the carboxy group-containing monomer (a-1) and the hydrophobic monomer (a-2) in the monomer mixture (contents of non-neutralized components; hereinafter defined in the same way) upon production of the vinyl-based polymer, or the contents of the constitutional unit derived from the carboxy group-containing monomer (a-1) and the constitutional unit derived from the hydrophobic monomer (a-2) in the vinyl-based polymer are as follows, from the viewpoint of improving dispersion stability of the pigment as well as from the viewpoint of improving ejection stability and gloss of the ink.

The content of the component (a-1) is preferably not less than 10% by mass, more preferably not less than 15% by mass and even more preferably not less than 20% by mass, and is also preferably not more than 75% by mass, more preferably not more than 60% by mass and even more preferably not more than 50% by mass.

The content of the component (a-2) is preferably not less than 25% by mass, more preferably not less than 40% by mass and even more preferably not less than 50% by mass, and is also preferably not more than 90% by mass, more preferably not more than 80% by mass and even more preferably not more than 75% by mass.

In addition, in the case where the component (a-3) is further included, the content of the component (a-3) is preferably not less than 5% by mass, more preferably not less than 10% by mass and even more preferably not less than 15% by mass, and is also preferably not more than 30% by mass, more preferably not more than 25% by mass and even more preferably not more than 20% by mass.

The mass ratio of the component (a-1) to the component (a-2) [component (a-1)/component (a-2)] is preferably not less than 0.1, more preferably not less than 0.15 and even more preferably not less than 0.2, and is also preferably not more than 3, more preferably not more than 2, even more preferably not more than 1 and further even more preferably not more than 0.5.

### (Production of Vinyl-Based Polymer)

The vinyl-based polymer may be produced by copolymerizing the aforementioned monomer mixture by conventionally known polymerization methods such as a bulk polymerization method, a solution polymerization method, a suspension polymerization method, an emulsion polymerization method, etc. Among these polymerization methods, preferred is the solution polymerization method.

The solvent used in the solution polymerization method is not particularly limited, and is preferably an organic polar solvent. If the organic polar solvent is miscible with water, the organic polar solvent may be used in the form of a mixture with water. Examples of the organic polar solvent include aliphatic alcohols having not less than 1 and not more than 3 carbon atoms; ketones having not less than 3 and not more than 5 carbon atoms; ethers; esters such as ethyl acetate, etc.; and the like. Among these organic polar solvents, preferred is methanol, ethanol, acetone, methyl ethyl ketone or a mixed solvent of at least one of these compounds with water, and more preferred is methyl ethyl ketone or a mixed solvent of methyl ethyl ketone and water.

The polymerization may be carried out in the presence of a polymerization initiator or a polymerization chain transfer agent.

Examples of the polymerization initiator include conventionally known radical polymerization initiators including, e.g., azo compounds such as 2,2'-azobisisobutyronitrile, 2,2'-azobis(2,4-dimethylvaleronitrile), etc., organic peroxides such as *tert*-butyl peroxyoctoate, benzoyl peroxide, etc.; and the like. The amount of the radical polymerization initiator used in the polymerization is preferably not less than 0.001 mol and not more than 5 mol, and more preferably not less than 0.01 mol and not more than 2 mol, per 1 mol of the monomer mixture.

Examples of the polymerization chain transfer agent include conventionally known chain transfer agents including, e.g., carboxy group-containing mercaptans such as mercapto-acetic acid, 2-mercapto-propionic acid, 3-mercapto-propionic acid, mercapto-succinic acid, etc.; alkyl mercaptans such as butanethiol, octanethiol, decanethiol, dodecanethiol, hexadecanethiol, octadecanethiol, etc.; hydroxy group-containing mercaptans such as 2-mercaptoethanol, 3-mercapto-1,2-propanediol, etc.; thiuram disulfides; and the like.

In addition, the type of a polymerization chain of the monomer polymerized is not particularly limited, and may be any of a random type, a block type, a graft type, etc.

The preferred polymerization conditions may vary depending upon the kinds of polymerization initiators, monomers and solvents used, etc. In general, the polymerization temperature is preferably not lower than 30°C and more preferably not lower than 50°C, and is also preferably not higher than 95°C and more preferably not higher than 80°C. The polymerization time is preferably not less than 1 hour and more preferably not less than 2 hours, and is also preferably not more than 20 hours and more preferably not more than 10 hours. Also, the polymerization is preferably conducted in a nitrogen gas atmosphere or an atmosphere of an inert gas such as argon, etc.

After completion of the polymerization reaction, the polymer produced may be isolated from the obtained reaction solution by known methods such as reprecipitation, removal of the solvent by distillation, etc. In addition, the resulting polymer may be purified by removing the unreacted monomers, etc., from the polymer by reprecipitation, membrane separation, chromatography, extraction, etc.

In the case where the vinyl-based polymer is used as the polymer dispersant (a) used in the present invention, the acid value of the polymer dispersant (a) is preferably not less than 50 mgKOH/g, more preferably not less than 100 mgKOH/g, even more preferably not less than 130 mgKOH/g, further even more preferably not less than 150 mgKOH/g, still further even more preferably not less than 180 mgKOH/g and furthermore preferably not less than 200 mgKOH/g, and is also preferably not more than 320 mgKOH/g, more preferably not more than 300 mgKOH/g, even more preferably not more than 270 mgKOH/g and further even more preferably not more than 250 mgKOH/g, from the viewpoint of improving ejection stability and gloss of the ink.

The acid value of the polymer dispersant (a) may be calculated from the mass ratio between monomers constituting the polymer dispersant (a). In addition, the acid value of the polymer dispersant (a) may also be determined by the method of dissolving or swelling the polymer dispersant (a) in an adequate organic solvent (e.g., methyl ethyl ketone) and subjecting the resulting solution or swelld product to titration.

In the case where the vinyl-based polymer is used as the polymer dispersant (a) used in the present invention, the number-average molecular weight of the polymer dispersant (a) is preferably not less than 1,000 more preferably not less than 2,000 and even more preferably not less than 3,000 from the viewpoint of improving gloss of the ink, and is also preferably not more than 10,000 more preferably not more than 7,000 and even more preferably not more than 5,000 from the viewpoint of improving dispersion stability of the pigment and ejection stability of the ink. Incidentally, the number-average molecular weight may be measured by the method described in Examples below.

### [Polyester]

The polymer dispersant (a) may be in the form of a polyester that contains a constitutional unit derived from an alcohol component and a constitutional unit derived from a carboxylic acid component, and may be produced by subjecting at least the alcohol component and the carboxylic acid component to polycondensation.

### (Alcohol Component)

The alcohol component as a raw material monomer of the polyester preferably includes an aromatic group-containing diol from the viewpoint of improving dispersibility of the pigment as well as from the viewpoint of improving gloss and ejection stability of the ink. The aromatic group-containing diol is preferably an alkyleneoxide adduct of bisphenol A. Incidentally, the alkyleneoxide adduct of bisphenol A as used herein means a whole structure of a compound formed by adding an oxyalkylene group to 2,2-bis(4-hydroxyphenyl)propane.

Specific examples of the preferred alkyleneoxide adduct of bisphenol A includes those compounds represented by the following general formula (I).

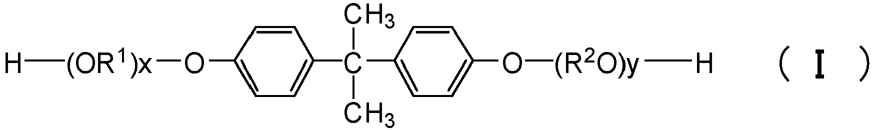

In the general formula (I), OR¹ and R²O are respectively an oxyalkylene group, preferably each independently an oxyalkylene group having not less than 1 and not more than 4 carbon atoms, and more preferably an oxyethylene group or an oxypropylene group.

The suffixes x and y each correspond to an average molar number of addition of an alkyleneoxide. In addition, from the viewpoint of attaining good reactivity with the carboxylic acid component, an average value of sums of x and y is preferably not less than 2, and is also preferably not more than 7, more preferably not more than 5 and even more preferably not more than 3.

Furthermore, the OR¹ groups in the number of x and the R²O groups in the number of y may be respectively the same or different from each other. From the viewpoints of improving adhesion properties of the resulting ink to a printing medium, the R¹O groups and the R²O groups are respectively preferably identical to each other. These alkyleneoxide adducts of bisphenol A may be used alone or in combination of any two or more thereof. As the alkyleneoxide adducts of bisphenol A, preferred are propyleneoxide adducts of bisphenol A and ethyleneoxide adducts of bisphenol A, and more preferred are propyleneoxide adducts of bisphenol A.

The content of the alkyleneoxide adduct of bisphenol A in the aforementioned alcohol component is preferably not less than 50 mol%, more preferably not less than 60 mol% and even more preferably not less than 70 mol%, and is also preferably not more than 100 mol%, from the viewpoint of improving dispersibility of the pigment as well as from the viewpoint of improving gloss and ejection stability of the ink.

The alcohol component as the raw material monomer of the polyester may also contain the following other alcohol components in addition to the alkyleneoxide adduct of bisphenol A. Specific examples of the other alcohol components include ethylene glycol, propylene glycol (1,2-propanediol), glycerin, pentaerythritol, trimethylolpropane, hydrogenated bisphenol A, sorbitol and alkylene (having not less than 2 and not more than 4 carbon atoms) oxide adducts of these compounds (average molar number of addition of the alkyleneoxide: not less than 1 and not more than 16), and the like. These other alcohol components may be used alone or in combination of any two or more thereof.

### (Carboxylic Acid Component)

The carboxylic acid component as a raw material monomer of the polyester includes carboxylic acids as well as anhydrides and alkyl (having not less than 1 and not more than 3 carbon atoms) esters of these carboxylic acids, etc.

Examples of the preferred carboxylic acid component include aromatic dicarboxylic acids, aliphatic dicarboxylic acids, alicyclic dicarboxylic acids and trivalent or higher-valent polycarboxylic acids. Among these carboxylic acids, from the viewpoint of improving reactivity with the alcohol component as well as from the viewpoint of improving ejection stability and gloss of the ink, more preferred are aromatic dicarboxylic acids and aliphatic dicarboxylic acids, and even more preferred are aliphatic dicarboxylic acids.

Examples of the preferred aromatic dicarboxylic acids include phthalic acid, isophthalic acid and terephthalic acid. Of these aromatic dicarboxylic acids, more preferred is terephthalic acid.

Examples of the aliphatic dicarboxylic acids include unsaturated aliphatic dicarboxylic acids and saturated aliphatic dicarboxylic acids. As the unsaturated aliphatic dicarboxylic acids, preferred are fumaric acid and maleic acid, and more preferred is fumaric acid. As the saturated aliphatic dicarboxylic acids, preferred are adipic acid and succinic acid.

Examples of the preferred alicyclic dicarboxylic acids include cyclohexanedicarboxylic acid, decalinedicarboxylic acid and tetrahydrophthalic acid.

Examples of the preferred trivalent or higher-valent polycarboxylic acids include trimellitic acid and pyromellitic acid.

Among these carboxylic acid components, preferred are the aliphatic dicarboxylic acids, more preferred are the unsaturated aliphatic dicarboxylic acids, and even more preferred is fumaric acid.

The aforementioned carboxylic acid components may be used alone or in combination of any two or more thereof.

### (Production of Polyester)

The polyester may be produced by subjecting an appropriate combination of the aforementioned alcohol component and carboxylic acid component to polycondensation reaction. For example, the polyester may be produced by subjecting the aforementioned alcohol component and carboxylic acid component to polycondensation reaction in an inert gas atmosphere at a temperature of not lower than 120°C and not higher than 250°C, if required in the presence of an esterification catalyst.

Examples of the esterification catalyst include tin catalysts, titanium catalysts, metal compounds such as antimony trioxide, zinc acetate, germanium dioxide, etc., and the like. Among these esterification catalysts, from the viewpoint of improving reaction efficiency of the esterification reaction upon synthesis of the polyester, preferred are tin catalysts. Specific examples of the preferred tin catalysts used herein include dibutyl tin oxide, tin (II) di(2-ethyl hexanoate) and salts of these compounds, and the like. Among these tin catalysts, more preferred is tin (II) di(2-ethyl hexanoate). Also, if required, an esterification co-catalyst such as 3,4,5-trihydroxybenzoic acid (gallic acid), etc., may be further used in the esterification reaction.

In addition, a radical polymerization inhibitor such as 4-*tert*-butyl catechol, hydroquinone, etc., may also be used in combination with the esterification catalyst and the like.

In the case where the polyester is used as the polymer dispersant (a), the acid value of the polymer dispersant (a) is preferably not less than 5 mgKOH/g and more preferably not less than 15 mgKOH/g, and is also preferably not more than 40 mgKOH/g, more preferably not more than 30 mgKOH/g and even more preferably not more than 25 mgKOH/g, from the viewpoint of improving ejection stability and gloss of the ink.

In the case where the polyester is used as the polymer dispersant (a), the number-average molecular weight (Mn) of the polymer dispersant (a) is preferably not less than 1,000 more preferably not less than 2,000 and even more preferably not less than 3,000 from the viewpoint of improving gloss of the ink, and is also preferably not more than 10,000, more preferably not more than 7,000 and even more preferably not more than 5,000 from the viewpoint of improving dispersion stability of the pigment and ejection stability of the ink.

The acid value and the number-average molecular weight (Mn) may be respectively adjusted to a desired value by appropriately controlling the kinds and compounding ratios of the monomers used as well as a reaction temperature and a reaction time used in the poly condensation reaction.

### <Emulsion of Polymer (b)>

The ink of the present invention may further contain an emulsion of a polymer (b). The emulsion of the polymer (b) is in the form of a water dispersion of pigment-free polymer particles. Examples of the polymer (b) constituting the pigment-free polymer particles include condensation-based polymers such as polyesters, polyurethanes, etc.; and vinyl-based polymers such as (meth)acrylic resins, styrene-based resins, styrene-(meth)acrylic resins, butadiene-based resins, styrene-butadiene-based resins, vinyl chloride-based resins, vinyl acetate-based resins, acrylic silicone-based resins, etc. From the viewpoint of improving ejection stability and gloss of the ink, the polymer (b) is preferably at least one polymer selected from the group consisting of a vinyl-based polymer and a polyester, and more preferably a vinyl-based polymer. As the vinyl-based polymer and polyester, there may be used the same vinyl-based polymers and polyesters as described above with respect to the polymer dispersant (a).

The water dispersion of the pigment-free polymer particles used in the present invention may be either an appropriately synthesized product or a commercially available product. In the case where the vinyl-based polymer or polyester is used as the polymer (b), the below-mentioned vinyl-based polymer emulsion or or polyester emulsion may also be used.

In addition, the polymer dispersant (a) and the polymer (b) may be the same or different from each other. However, from the viewpoint of improving ejection stability and gloss of the ink, the polymer dispersant (a) and the polymer (b) are preferably identical to each other.

When the polymer (b) contains acid groups, it is preferred that the acid groups of the polymer (b) are partially neutralized with a neutralizing agent, from the viewpoint of improving dispersion stability of the pigment as well as from the viewpoint of improving ejection stability and gloss of the ink.

Examples of commercially available products of the emulsion of the polymer (b) include dispersions of acrylic resins such as "NeoCryl A1127" (anionic self-crosslinkable water-based acrylic resin) available from DSM Coating Resins, Inc., and "JONCRYL 390", JONCRYL 7100", "JONCRYL 7600", "JONCRYL 537J", "JONCRYL PDX-7164", "JONCRYL 538J" and "JONCRYL 780" all available from BASF Japan, Ltd., etc.; polyurethane resins such as "WBR-2018" and "WBR-2000U" both available from Taisei Fine Chemical Co., Ltd., etc.; styrene-butadiene resins such as "SR-100" and "SR-102" both available from Nippon A & L Inc., etc.; vinyl chloride-based resins such as "VINYBLAN 700" and "VINYBLAN 701" both available from Nissin Chemical Industry Co., Ltd., etc.; and polyesters such as "NEW TRACK 2010" available from Kao Corporation, and "ELITEL KA" series products and "ELITEL KT" series products all available from UNITIKA Ltd., etc.

The cumulant average particle size of the polymer (b) contained in the form of an emulsion thereof is preferably not less than 10 nm, more preferably not less than 20 nm and even more preferably not less than 30 nm, and is also preferably not more than 250 nm, more preferably not more than 210 nm, even more preferably not more than 150 nm, further even more preferably not more than 100 nm and still further even more preferably not more than 70 nm, from the viewpoint of suppressing formation of coarse particles as well as from the viewpoint of improving ejection stability and gloss of the ink. The aforementioned average particle size may be measured by the method described in Examples below.

### <Polymerization Initiator>

The ink of the present invention may further contain a polymerization initiator from the viewpoint of promoting curing of the ink by irradiation with an active energy ray. The polymerization initiator is preferably a photopolymerization initiator that is capable of generating radicals or cations by irradiation with an active energy ray.

Examples of the photopolymerization initiator include acetophenones, benzophenones, ketals, anthraquinones, thioxanthones, azo compounds, peroxides, 2,3-dialkylthione compounds, disulfide compounds, thiuram compounds, fluoroamine compounds, and the like. Specific examples of the photopolymerization initiator include 2-methyl-4'-(methylthio) -2-morpholinopropiophenone, 4,4'-bis(methylamino) benzophenone, 2,2'-diethoxyacetophenone, and the like. Among these photopolymerization initiators, from the viewpoint of promoting polymerization of the polymerizable monomer, preferred is 2-methyl-4'-(methylthio) -2-morpholinopropiophenone.

When an electron beam is used as the active energy ray, the polymerization is allowed to proceed without including the polymerization initiator in the ink. Therefore, in such a case, it may be unnecessary to add the polymerization initiator to the ink, and from the viewpoint of improving ejection stability and gloss of the ink, it is preferred that the ink contains no polymerization initiator. In addition, in the case where an ultraviolet ray is used as the active energy ray, from the viewpoint of promoting the polymerization reaction, the ink preferably contains the polymerization initiator, and more preferably contains the photopolymerization initiator.

The ink of the present invention may further contain various additives that may be usually used in inks, such as a humectant, a wetting agent, a penetrant, a surfactant, a viscosity modifier, a defoaming agent, an antiseptic agent, a mildew-proof agent, a rust preventive, etc., if required.

### [Process for Producing Ink]

The ink of the present invention is preferably produced by the process including the following step 1 which is to be conducted after previously preparing a water-based pigment dispersion (A) by dispersing the pigment in a water-based medium with the polymer dispersant (a) (hereinafter also referred to merely as a "water-based pigment dispersion (A)"). In the step 1, the water-based pigment dispersion (A) and the polymerizable monomer (i) are mixed, if required together with water, etc., to produce the ink of the present invention. The method of mixing these respective components is not particularly limited.

Step 1: mixing the water-based pigment dispersion (A) obtained by dispersing the pigment in the water-based medium with the polymer dispersant (a), and the water-soluble active energy ray-polymerizable monomer (i).

### <Water-Based Pigment Dispersion (A)>

The water-based pigment dispersion (A) is preferably produced by the method including the step of subjecting a pigment mixture containing the pigment, the polymer dispersant (a) and water to dispersion treatment from the viewpoint of improving ejection stability and gloss of the ink.

More specifically, the water-based pigment dispersion (A) may be produced by the method of adding the pigment and water to the previously prepared emulsion of the polymer dispersant (a) to obtain a pigment mixture, and then subjecting the pigment mixture to dispersion treatment; the method of subjecting a pigment mixture containing the polymer dispersant (a), the pigment, an organic solvent and water, if required together with a neutralizing agent, a surfactant, etc., to dispersion treatment to obtain a dispersion, and then removing the organic solvent from the thus obtained dispersion; and the like. Among these methods, from the viewpoint of improving ejection stability and gloss of the ink, preferred is the method of adding the pigment, the organic solvent and water to the previously prepared emulsion of the polymer dispersant (a) to obtain a pigment mixture, then subjecting the pigment mixture to dispersion treatment to obtain the dispersion, and further removing the organic solvent from the dispersion.

The emulsion of the polymer dispersant (a) may also contain a dispersant such as a surfactant, if required. The emulsion may be either an appropriately synthesized product or a commercially available product.

In the case where a vinyl-based polymer is used as the polymer dispersant (a), examples of commercially available products of an emulsion of the vinyl-based polymer include dispersions of acrylic resins such as "JONCRYL 390", "JONCRYL 7100", "JONCRYL 734" and "JONCRYL 538" all available from BASF Japan, Ltd., etc.; vinyl chloride-acrylic resins such as "VINYBLAN 701" available from Nissin Chemical Industry Co., Ltd., etc.; and the like.

In the case where a polyester is used as the polymer dispersant (a), examples of commercially available products of an emulsion of the polyester include "NEW TRACK 2010" available from Kao Corporation; "ELITEL KA" series products and "ELITEL KT" series products all available from UNITIKA, Ltd.; and the like.

### (Production of Emulsion of Vinyl-Based Polymer)

In the case where the vinyl-based polymer is used as the polymer dispersant (a), the emulsion of the vinyl-based polymer can be produced by the method of stirring a mixture containing the vinyl-based polymer and water, if required together with a neutralizing agent, while heating, followed by cooling the mixture; the method of subjecting a mixture containing the vinyl-based polymer, an organic solvent, a neutralizing agent and water to dispersion treatment to obtain a dispersion, and then removing the organic solvent from the thus obtained dispersion; and the like. Among these methods, from the viewpoint of facilitating the working operation, preferred is the method of stirring a mixture containing the vinyl-based polymer and water, if required together with a neutralizing agent, while heating, followed by cooling the mixture.

The temperature used upon stirring the aforementioned mixture is preferably not lower than 60°C, more preferably not lower than 70°C and even more preferably not lower than 80°C, and is also preferably not higher than 100°C and preferably not higher than 95°C.

The stirring time is preferably not less than 0.5 hour and more preferably not less than 0.8 hour, and is also preferably not more than 30 hours, more preferably not more than 10 hours and even more preferably not more than 5 hours.

In the production of the emulsion of the vinyl-based polymer, the kind and equivalent amount of the neutralizing agent used are the same as those described as to the aforementioned polymer dispersant (a). In addition, the vinyl-based polymer may be previously neutralized. In the case where the vinyl-based polymer is previously neutralized, it is preferred that a total equivalent amount of the neutralizing agent used as a whole lies within the aforementioned range.

### (Production of Emulsion of Polyester)

In the case where the polyester is used as the polymer dispersant (a), the emulsion of the polyester can be efficiently produced by the method of mixing the polyester, a neutralizing agent, an organic solvent and a water-based medium with each other, followed by removing the organic solvent from the resulting mixture. There is preferably used the method in which after adding the neutralizing agent to a solution prepared by dissolving the polyester in the organic solvent, the water-based medium is gradually added to the resulting mixture to subject the mixture to phase inversion emulsification.

The organic solvent used for dissolving the polyester therein is not particularly limited. As the organic solvent, preferred are ketones, ethers, esters, aliphatic alcohols having not less than 1 and not more than 3 carbon atoms and the like, more preferred are ketones, and even more preferred is methyl ethyl ketone.

In the production of the emulsion of the polyester, the kind and equivalent amount of the neutralizing agent used are the same as those described as to the aforementioned polymer dispersant (a). In addition, the polyester may be previously neutralized. In the case where the polyester is previously neutralized, it is preferred that a total equivalent amount of the neutralizing agent used as a whole lies within the aforementioned range.

### (Dispersion Treatment)

In the dispersion treatment of the pigment mixture, the pigment particles may be atomized into fine particles having a desired particle size only by substantial dispersion treatment in which a shear stress is applied to the pigment particles. However, from the viewpoint of obtaining a uniform pigment dispersion, it is preferred that the pigment mixture is first subjected to preliminary dispersion treatment, and then further subjected to the substantial dispersion treatment.

As the disperser used in the preliminary dispersion treatment, there may be employed ordinary mixing and stirring devices such as anchor blades, disper blades, etc.

As the means for applying a shear stress to the pigment particles in the substantial dispersion treatment, there may be used, for example, kneading machines such as roll mills, kneaders, etc., high-pressure homogenizers such as "MICROFLUIDIZER", etc., and media-type dispersers such as paint shakers, beads mills, etc. Among these devices, the high-pressure homogenizers are preferably used from the viewpoint of reducing a particle size of the pigment.

In the case where the dispersion treatment is conducted using the high-pressure homogenizer, the particle size of the pigment can be adjusted to a desired value by controlling the treating pressure and the number of passes through the high-pressure homogenizer.

The treating pressure used in the dispersion treatment is preferably not less than 60 MPa, more preferably not less than 100 MPa and even more preferably not less than 150 MPa, and is also preferably not more than 300 MPa and more preferably not more than 250 MPa, from the viewpoint of enhancing productivity of the resulting ink and cost efficiency.

Also, the number of passes through the high-pressure homogenizer is preferably controlled to not less than 3 and more preferably not less than 7, and is also preferably controlled to not more than 30 and more preferably not more than 20.

In addition, for the purpose of removing coarse particles, etc., it is preferred that the resulting dispersion obtained after the aforementioned dispersion treatment is further subjected to centrifugal separation, and then a liquid layer portion thus separated is subjected to filtration using a filter, etc., to thereby obtain a water dispersion which has been allowed to pass through the filter, etc., as the water-based pigment dispersion (A).

The concentration of non-volatile components in the water-based pigment dispersion (A) (solid content of the water-based pigment dispersion (A)) is preferably not less than 10% by mass and more preferably not less than 15% by mass, and is also preferably not more than 30% by mass and more preferably not more than 25% by mass, from the viewpoint of improving dispersion stability of the resulting pigment dispersion as well as from the viewpoint of facilitating production of the pigment dispersion. The solid content of the water-based pigment dispersion (A) may be measured by the method described in Examples below.

The content of the pigment in the water-based pigment dispersion (A) is preferably not less than 5% by mass, more preferably not less than 7% by mass and even more preferably not less than 10% by mass from the viewpoint of enhancing optical density of the resulting ink, and is also preferably not more than 30% by mass, more preferably not more than 25% by mass and even more preferably not more than 20% by mass from the viewpoint of improving dispersion stability of the resulting pigment dispersion.

The mass ratio of the pigment to the polymer dispersant (a) [pigment/polymer dispersant (a)] in the water-based pigment dispersion (A) is preferably not less than 1, more preferably not less than 1.5 and even more preferably not less than 1.7, and is also preferably not more than 10, more preferably not more than 5, even more preferably not more than 3 and further even more preferably not more than 2.5.

The cumulant average particle size of the water-based pigment dispersion (A) is preferably not less than 40 nm, more preferably not less than 50 nm and even more preferably not less than 60 nm, and is also preferably not more than 200 nm, more preferably not more than 150 nm and even more preferably not more than 130 nm, from the viewpoint of improving ejection stability and gloss of the resulting ink. The aforementioned average particle size may be measured by the method described in Examples below.

In the case where the ink of the present invention further contains the emulsion of the polymer (b), the time of addition of the emulsion of the polymer (b) is not particularly limited. From the viewpoint of improving ejection stability and gloss of the ink, the step 1 preferably includes the following steps 1-1 and 1-2.
Step 1-1: mixing the water-based pigment dispersion (A) and the emulsion of the polymer (b) to obtain a mixture (C); and
Step 1-2: mixing the mixture (C) obtained in the step 1-1 and the water-soluble active energy ray-polymerizable monomer (i).

From the viewpoint of improving ejection stability and gloss of the ink, it is preferred that the emulsion of the polymer (b) is added to the ink such that the mass ratio of the polymer (b) to the polymer dispersant (a) [polymer (b)/polymer dispersant (a)] in the ink is preferably not less than 0.1, more preferably not less than 0.3 and even more preferably not less than 0.5, and is also preferably not more than 10, more preferably not more than 5 and even more preferably not more than 2.

In the present invention, in the case where the polymer dispersant (a) or the polymer (b) contained as the emulsion thereof contains acid groups, it is preferred that the acid groups contained in either one of the polymer dispersant (a) and the polymer (b) are partially crosslinked, and it is more preferred that the acid groups contained in both of the polymer dispersant (a) and the polymer (b) are partially crosslinked. The crosslinking treatment is preferably conducted before being mixed with the polymerizable monomer (i).

In the case where the step 1 includes the steps 1-1 and 1-2, it is preferred that the step 1 further includes the step 1-1-1 of subjecting the water-based pigment dispersion (A) to crosslinking treatment before mixing the water-based pigment dispersion (A) with the emulsion of the polymer (b) in the step 1-1 (hereinafter also referred to merely as the "step 1-1-1"), or the step 1-1-2 of subjecting the mixture (C) to crosslinking treatment after the step 1-1 and before the step 1-2 (hereinafter also referred to merely as the "step 1-1-2"). From the viewpoint of improving ejection stability and gloss of the ink, it is more preferred that the step 1 includes the step 1-1-2. By conducting the step 1-1-2, it is possible to introduce a crosslinked structure into both of the polymer dispersant (a) and the polymer (b), so that the resulting ink can be improved in ejection stability and gloss.

### <Crosslinking Agent>

The crosslinking agent is preferably a water-insoluble polyfunctional epoxy compound containing two or more epoxy groups in a molecule thereof. In the case where the polymer dispersant (a) or the polymer (b) contains the acid groups, by partially crosslinking the acid groups with the water-insoluble polyfunctional epoxy compound, it is possible to improve ejection stability and gloss of the resulting ink. From the same viewpoint as described above, the crosslinking agent is more preferably a compound containing two or more glycidyl ether groups in a molecule thereof, and even more preferably a polyglycidyl ether compound of a polyhydric alcohol containing a hydrocarbon group having not less than 3 and not more than 8 carbon atoms.

The water solubility rate (mass ratio) of the crosslinking agent is preferably not more than 50%, more preferably not more than 40% and even more preferably not more than 35% from the viewpoint of efficiently conducting the crosslinking reaction in the water-based medium as well as from the viewpoint of improving ejection stability and gloss of the resulting ink. The "water solubility rate % (mass ratio)" as used herein means a rate (%) of dissolution of the crosslinking agent as measured by dissolving 10 parts by mass of the crosslinking agent in 90 parts by mass of water at room temperature (25°C).

The molecular weight of the crosslinking agent is preferably not less than 120, more preferably not less than 150 and even more preferably not less than 200, and is also preferably not more than 2,000, more preferably not more than 1,500 and even more preferably not more than 1,000, from the viewpoint of facilitating the crosslinking reaction as well as from the viewpoint of improving ejection stability and gloss of the ink.

The epoxy equivalent of the crosslinking agent is preferably not less than 90, more preferably not less than 100 and even more preferably not less than 110, and is also preferably not more than 300, more preferably not more than 200 and even more preferably not more than 150.

The number of epoxy groups contained in the crosslinking agent is not less than 2 per a molecule thereof, and is also preferably not more than 6 per a molecule thereof, from the viewpoint of efficiently conducting the crosslinking reaction to thereby improve ejection stability and gloss of the ink. The number of epoxy groups contained in the crosslinking agent is also more preferably not more than 4 per a molecule thereof from the viewpoint of good availability in the market.

Specific examples of the crosslinking agent include polyglycidyl ethers such as polypropylene glycol diglycidyl ether (water solubility rate: 31%), glycerol polyglycidyl ether, polyglycerol polyglycidyl ether, trimethylolpropane polyglycidyl ether (water solubility rate: 27%), sorbitol polyglycidyl ether, pentaerythritol polyglycidyl ether (water solubility rate: 0%), resorcinol diglycidyl ether, neopentyl glycol diglycidyl ether, 1,6-hexanediol diglycidyl ether, hydrogenated bisphenol A-type diglycidyl ethers, etc., and the like. Of these crosslinking agents, preferred is at least one compound selected from the group consisting of polypropylene glycol diglycidyl ether, trimethylolpropane polyglycidyl ether and pentaerythritol polyglycidyl ether, and more preferred is trimethylolpropane polyglycidyl ether.

The crosslinking degree of the acid groups of the polymer dispersant (a) or the polymer (b) is preferably not less than 10 mol%, more preferably not less than 20 mol%, even more preferably not less than 30 mol%, further even more preferably not less than 40 mol% and still further even more preferably not less than 50 mol% from the viewpoint of improving dispersion stability of the pigment as well as from the viewpoint of improving ejection stability and gloss of the ink, and is also preferably not more than 90 mol%, more preferably not more than 80 mol% and even more preferably not more than 70 mol% from the same viewpoint as described above. The crosslinking degree is an apparent crosslinking degree calculated from an acid value of the polymer and an equivalent amount of the crosslinkable functional groups contained in the crosslinking agent. More specifically, in the case where the water-insoluble polyfunctional epoxy compound is used as the crosslinking agent, the crosslinking degree is defined by a ratio of a mole equivalent number of the epoxy groups of the water-insoluble polyfunctional epoxy compound to a mole equivalent number of the acid groups of the polymer [(mole equivalent number of epoxy groups of water-insoluble polyfunctional epoxy compound)/(mole equivalent number of acid groups of polymer)].

In the case where both of the polymer dispersant (a) and the polymer (b) contain the acid groups, the crosslinking degree as used in the present invention is defined by a ratio of a mole equivalent number of the crosslinkable functional groups of the crosslinking agent to a total mole equivalent number of the acid groups of the polymer dispersant (a) and the polymer (b).

The temperature used in the crosslinking treatment is preferably not lower than 45°C, more preferably not lower than 60°C and even more preferably not lower than 80°C, and is also preferably not higher than 100°C and more preferably not higher than 95°C, from the viewpoint of promoting the crosslinking reaction as well as from the viewpoint of improving ejection stability and gloss of the ink.

The time of the crosslinking treatment is preferably not less than 0.5 hour, more preferably not less than 1 hour and even more preferably not less than 1.5 hours, and is also preferably not more than 12 hours, more preferably not more than 8 hours and even more preferably not more than 5 hours, from the viewpoint of completing the crosslinking reaction and attaining good cost efficiency.

### (Concentration Step)

From the viewpoint of improving ejection stability and gloss of the ink, the production process of the present invention preferably further includes the step of concentrating the water-based pigment dispersion (A) or the mixture (C) before mixing the water-based pigment dispersion (A) or the mixture (C) with the polymerizable monomer (i).

As the concentrating method, there is preferably used, for example, the method of distilling off water from the water-based pigment dispersion (A) or the mixture (C) under heating or under reduced pressure. The heating temperature is preferably not lower than 35°C, more preferably not lower than 45°C and even more preferably not lower than 55°C from the viewpoint of enhancing productivity of the ink, and is also preferably not higher than 85°C, more preferably not higher than 75°C and even more preferably not higher than 65°C from the viewpoint of improving dispersion stability of the pigment and suppressing occurrence of thermal decomposition thereof, etc.

The concentration step is preferably conducted while controlling the contents of the pigment and water in the ink to desired values.

In the production process of the present invention, if required, the aforementioned polymerization initiator and various additives may be further added to the ink, and the resulting ink may be further subjected to filtration treatment using a filter, etc.

The contents of the respective components in the ink of the present invention as well as properties of the ink are as follows.

### (Content of Water)

The content of water in the ink is not less than 8.5% by mass, preferably not less than 9% by mass, more preferably not less than 9.5% by mass and even more preferably not less than 10% by mass, and is also not more than 65% by mass, preferably not more than 60% by mass, more preferably not more than 50% by mass, even more preferably not more than 40% by mass and further even more preferably not more than 30% by mass, from the viewpoint of improving ejection stability and gloss of the ink.

### (Content of Polymerizable Monomer (i))

The content of the polymerizable monomer (i) in the ink is not less than 30% by mass, preferably not less than 40% by mass, more preferably not less than 50% by mass, even more preferably not less than 60% by mass and further even more preferably not less than 70% by mass, and is also preferably not more than 85% by mass and more preferably not more than 80% by mass, from the viewpoint of improving ejection stability and gloss of the ink.

### (Total Content of Water and Polymerizable Monomer (i))

The total content of water and the polymerizable monomer (i) in the ink is preferably not less than 40% by mass, more preferably not less than 50% by mass, even more preferably not less than 60% by mass, further even more preferably not less than 70% by mass, still further even more preferably not less than 80% by mass and furthermore preferably not less than 85% by mass from the viewpoint of improving ejection stability and gloss of the ink, and is also preferably not more than 95% by mass and more preferably not more than 92% by mass from the viewpoint of enhancing optical density of the ink.

### (Content of Pigment)

The content of the pigment in the ink is preferably not less than 1% by mass, more preferably not less than 2% by mass and even more preferably not less than 3% by mass from the viewpoint of enhancing optical density of the ink, and is also preferably not more than 15% by mass, more preferably not more than 10% by mass and even more preferably not more than 7% by mass from the viewpoint of improving ejection stability and gloss of the ink.

### (Total Content of Pigment and Polymer)

The total content of the pigment and the polymer in the ink is preferably not less than 3% by mass, more preferably not less than 5% by mass and even more preferably not less than 7% by mass, and is also preferably not more than 20% by mass, more preferably not more than 18% by mass, even more preferably not more than 15% by mass and further even more preferably not more than 13% by mass.

### (Content of Polymerization Initiator)

The content of the polymerization initiator in the ink is preferably not less than 1 part by mass, more preferably not less than 2 parts by mass and even more preferably not less than 3 parts by mass, and is also preferably not more than 10 parts by mass, more preferably not more than 8 parts by mass and even more preferably not more than 6 parts by mass, on the basis of 100 parts by mass of the components other than the polymerization initiator in the ink.

### (Mass Ratio [Pigment/Whole Solid Components] in Ink)

The mass ratio of the pigment to whole solid components [pigment/whole solid components] in the ink is preferably not less than 0.1, more preferably not less than 0.3 and even more preferably not less than 0.4 from the viewpoint of enhancing optical density of the ink, and is also preferably not more than 0.95, more preferably not more than 0.8, even more preferably not more than 0.7 and further even more preferably not more than 0.6 from the viewpoint of improving ejection stability and gloss of the ink.

In the case where the ink contains the polymer dispersant (a) and the crosslinking agent, the total amount of the polymers contained in the ink as described in the present invention means a total content of the polymer dispersant (a) and the crosslinking agent in the ink, and in the case where the ink further contains the emulsion of the polymer (b) in addition to the polymer dispersant (a) and the crosslinking agent, the total amount of the polymers contained in the ink as described in the present invention means a total content of the polymer dispersant (a), the crosslinking agent and the polymer (b) in the ink

### (Properties of Ink)

The viscosity of the ink as measured at 32°C is preferably not less than 2.0 mPa • s, more preferably not less than 3.0 mPa • s and even more preferably not less than 4.0 mPa • s, and is also preferably not more than 12 mPa • s, more preferably not more than 9.0 mPa • s and even more preferably not more than 7.0 mPa • s, from the viewpoint of improving ejection stability and gloss of the ink.

Incidentally, the viscosity may be measured by the method described in Examples below.

The pH value of the ink is preferably not less than 6.0, more preferably not less than 6.2 and even more preferably not less than 6.5 from the viewpoint of improving storage stability and ejection stability of the ink, and is also preferably not more than 11.0, more preferably not more than 10.0 and even more preferably 9.5 from the viewpoint of improving the resistance of members to the ink and suppressing skin irritation.

Incidentally, the pH value may be measured by the method described in Examples below.

### [Ink-Jet Printing Method]

The ink of the present invention is capable of providing a printed material that is excellent in gloss, and therefore can be suitably used as an ink for flexographic printing, an ink for gravure printing or an ink for ink-jet printing. In particular, the ink of the present invention is excellent in ejection stability and capable of providing a printed material having high gloss, and is therefore preferably used in an ink-jet printing method in which a printed material is obtained in an ink-jet printing manner.

The ink-jet printing method of the present invention (hereinafter also referred to merely as a "printing method") is preferably conducted by the method including the following steps I and II using the aforementioned ink:
Step I: allowing the ink to adhere to a printing medium in an ink-jet printing manner; and
Step II: irradiating an active energy ray to the ink adhered to the printing medium in the step I to cure the ink.

In the printing method of the present invention, the steps I and II may be carried out within an ink-jet printing apparatus equipped with an ink ejection means and an active energy ray irradiation means, or after conducting the step I in the ink-jet printing apparatus, the step II may be conducted in an active energy ray irradiation apparatus.

### (Step I)

The step I is the step of allowing the aforementioned ink to adhere to the printing medium in an ink-jet printing manner.

The ink-ejection type of the ink-jet printing apparatus may be either a thermal type or a piezoelectric type. Among these ink-ejection types, preferred is a piezoelectric type from the viewpoint of improving ejection stability of the ink.

Examples of the printing medium that may be used in the present invention include a high-water absorbing plain paper, a low-water absorbing coated paper and a non-water absorbing resin film. Specific examples of the coated paper include a versatile glossy coated paper, a multi-color foam glossy coated paper, and the like. Specific examples of the resin film include a polyester film, a polyvinyl chloride film, a polypropylene film, a polyethylene film and the like. The ink of the present invention can be applied to the resin film as the printing medium in view of excellent gloss thereof.

From the viewpoint of improving gloss of the ink, the amount of the ink adhered to the printing medium in terms of a solid content thereof after being cured (i.e., a total content of whole solid components and the polymerizable monomer (i) in the ink) is preferably not less than 10 mg/m², more preferably not less than 50 mg/m² and even more preferably not less than 100 mg/m², and is also preferably not more than 1,000 mg/m² and more preferably not more than 800 mg/m².

In addition, from the viewpoint of promoting drying of the ink on the printing medium as well as from the viewpoint of suppressing formation of irregularities on the printed surface to exhibit high gloss thereon, the printing medium onto which the ink has been adhered may be further heated. The heating temperature of the printing medium is preferably not lower than 40°C and more preferably not lower than 50°C from the viewpoint of improving gloss of the printed surface, and is also preferably not higher than 100°C, more preferably not higher than 80°C and even more preferably not higher than 70°C from the viewpoint of suppressing deterioration of the printing medium as well as from the viewpoint of saving energy consumed.

The heating time is preferably not less than 10 seconds, more preferably not less than 30 seconds and even more preferably not less than 60 seconds from the viewpoint of promoting drying of the ink, and is also preferably not more than 10 minutes and more preferably not more than 5 minutes from the viewpoint of suppressing deterioration of the printing medium as well as from the viewpoint of saving energy consumed.

### (Step II)

The step II is the step of irradiating an active energy ray to the ink adhered to the printing medium in the step I to cure the ink.

Examples of the active energy ray irradiated include an electron beam, an ultraviolet ray, and the like. Among these active energy rays, from the viewpoint of well performing high-speed printing while satisfying both of ejection stability and gloss, preferred is an electron beam, whereas from the viewpoint of conducting the irradiation by a simple facility, preferred is an ultraviolet ray.

As the electron beam irradiation apparatus, there may be used a scanning type apparatus, an area beam type apparatus and the like. Examples of an electron beam accelerator usable in the present invention include various electron accelerating apparatuses, e.g., electrostatic accelerators such as a van de Graaff accelerator, a Cockcroft Walton accelerator, etc.; high-frequency accelerators; and the like.

The acceleration voltage applied to the apparatus is preferably not less than 25 kV and more preferably not less than 50 kV from the viewpoint of promoting curing of the ink, and is also preferably not more than 300 kV, more preferably not more than 200 kV and even more preferably not more than 100 kV from the viewpoint of reducing the size of the irradiation apparatus and improving cost efficiency.

The irradiation dose of the electron beam is preferably not less than 5 kGy, more preferably not less than 10 kGy and even more preferably not less than 30 kGy, and is also preferably not more than 300 kGy, more preferably not more than 100 kGy and even more preferably not more than 80 kGy, from the viewpoint of promoting polymerization of the polymerizable monomer.

The transporting speed of the printing medium through the electron beam irradiation apparatus is preferably not less than 5 m/min, more preferably not less than 10 m/min and even more preferably not less than 15 m/min from the viewpoint of performing high-speed printing.

Examples of the ultraviolet ray irradiation apparatus include those apparatuses equipped with a UV irradiation lamp. Examples of the UV irradiation lamp include a high-pressure mercury lamp, an ultrahigh-pressure mercury lamp, a low-pressure mercury lamp, a metal halide lamp, a high-power metal halide lamp, a mercury lamp coated with a fluorescent substance, a xenon flash lamp, a deep UV lamp, a microwave elecrodeless UV lamp, a UV laser, a UV excimer lamp and the like. In addition, from the viewpoint of promoting curing of the ink, there may also be used such an ultraviolet ray irradiation apparatus of a emitted diode type using UV-LED.

The wavelength of the ultraviolet ray irradiated from a light source of an ultraviolet ray irradiation lamp is preferably not less than 200 nm and more preferably not less than 240 nm, and is also preferably not more than 400 nm and more preferably not more than 380 nm, from the viewpoint of promoting polymerization of the polymerizable monomer.

The output of the ultraviolet ray irradiation apparatus is preferably not less than 50 W/cm and more preferably not less than 100 W/cm from the viewpoint of promoting polymerization of the polymerizable monomer, and is also preferably not more than 500 W/cm and more preferably not more than 450 W/cm from the viewpoint of suppressing damage to the resulting printed material.

The transporting speed of the printing medium through the ultraviolet ray irradiation apparatus is preferably not less than 5 m/min, more preferably not less than 10 m/min and even more preferably not less than 15 m/min from the viewpoint of performing high-speed printing.

### EXAMPLES

In the following Synthesis Examples, Preparation Examples, Production Examples, Examples and Comparative Examples, the "part(s)" and "%" indicate "part(s) by mass" and "% by mass", respectively, unless otherwise specified.

### (1) Measurement of Number-Average Molecular Weight of Polymer

The number-average molecular weight of the polymer was measured by gel permeation chromatography [GPC apparatus: "HLC-8320GPC" available from Tosoh Corporation; columns: "TSKgel Super AWM-H", "TSKgel Super AW3000" and "TSKgel guard column Super AW-H" all available from Tosoh Corporation; flow rate: 0.5 mL/min] using a solution prepared by dissolving phosphoric acid and lithium bromide in *N*,*N-*dimethylformamide such that concentrations of phosphoric acid and lithium bromide in the resulting solution were 60 mmol/L and 50 mmol/L, respectively, as an eluent, and using kits of monodisperse polystyrenes having previously known molecular weights [PStQuick B(F-550, F-80, F-10, F-1, A-1000), PStQuick C(F-288, F-40, F-4, A-5000, A-500] all available from Tosoh Corporation as a reference standard substance.

A sample to be measured was prepared by mixing 0.1 g of the polymer with 10 mL of the aforementioned eluent in a glass vial, stirring the resulting mixture at 25°C for 10 hours with a magnetic stirrer, and then subjecting the mixture to filtration treatment through a syringe filter "DISMIC-13HP PTFE" (0.2 µm) available from Advantec Co., Ltd.

### (2) Measurement of Cumulant Average Particle Size

Cumulant analysis was conducted using a laser particle analyzing system "ELS-8000" available from Otsuka Electrics Co., Ltd., to measure a cumulant average particle size of particles in a sample to be measured. The above measurement was conducted under the conditions including a temperature of 25°C, an angle between incident light and detector of 90° and a cumulative number of 100 times, and a refractive index of water (1.333) was input to the analyzing system as a refractive index of the dispersing medium. The concentration of the sample to be measured was controlled to 5 x 10⁻³% (in terms of a solid content thereof).

### (3) Measurement of Solid Content

Sodium sulfate dried to constant weight in a desiccator was weighed in an amount of 10.0 g and charged into a 30 mL polypropylene container (φ: 40 mm; height: 30 mm), and about 1.0 g of a sample to be measured was added to the container. The contents of the container were mixed with each other and then accurately weighed. The resulting mixture was maintained in the container at 105°C for 2 hours to remove volatile components therefrom, and further allowed to stand in a desiccator at room temperature (25°C) for 15 minutes, followed by measuring a mass of the sample. The mass of the sample after removing the volatile components therefrom was regarded as a mass of solids therein. The solid content of the sample was calculated by dividing the mass of the solids by the mass of the sample initially added.

### (4) Viscosity of Ink

The viscosity of the ink was measured at 32°C using an E-type viscometer "TV-25" (equipped with a standard cone rotor (1°34' x R24); rotating speed: 50 rpm) available from Toki Sangyo Co., Ltd.

### (5) pH of Ink

The pH value of the ink was measured at 25°C using a bench-top pH meter "F-71" available from Horiba Ltd., equipped with a pH electrode "6337-10D" available from Horiba Ltd.

### <Synthesis of Polymer>

### Synthesis Example 1 (Synthesis of Polymer (P-1))

A 500 mL polyethylene beaker was charged with 32 g of acrylic acid available from Wako Pure Chemical Industries, Ltd., 63 g of styrene available from Wako Pure Chemical Industries, Ltd., 5 g of *α*-methyl styrene available from Wako Pure Chemical Industries, Ltd., 100 g of methyl ethyl ketone (MEK), 1 g of an azo-based radical polymerization initiator "V-65" (tradename; 2,2'-azobis(2,4-dimethylvaleronitrile)) available from Wako Pure Chemical Industries, Ltd., and 0.5 g of 2-mercapto-propionic acid as a polymerization chain transfer agent, and the contents of the beaker were intimately mixed with each other to prepare a monomer mixture solution. Next, 10% of the monomer mixture solution prepared above was charged into a 500 mL three-necked round bottom flask equipped with a thermometer, a reflux device and a dropping funnel, and sufficiently mixed using a magnetic stirrer, and then an inside atmosphere of the flask was fully replaced with nitrogen gas. On the other hand, remaining 90% of the aforementioned monomer mixture solution was charged into the dropping funnel. In a nitrogen atmosphere, the monomer mixture solution in the reaction vessel was heated to 65°C while stirring, and then the mixture solution in the dropping funnel was added dropwise thereinto over 3 hours. After the elapse of 2 hours from completion of the dropwise addition while maintaining the resulting solution at 65°C, the solution was heated to 75°C, and after reaching 75°C, the solution was stirred for 2 hours to complete the reaction. Thereafter, the resulting reaction solution was dried under reduced pressure to remove the solvent and the remaining monomers therefrom, thereby obtaining a polymer (P-1) (acid value: 235 mgKOH/g; number-average molecular weight: 4,100).

### Synthesis Examples 2 to 6 (Synthesis of Polymers (P-2) to (P-6))

The same procedure as in Synthesis Example 1 was repeated except that the composition charged was changed to those shown in Table 1, thereby obtaining polymers (P-2) to (P-6).

Incidentally, the respective notations shown in Table 1 are as follows.
*1: The composition charged was represented by contents of respective active ingredients therein.
*2: AS-6S: Styrene-based macromonomer "AS-6S" (tradename; active ingredient content: 50%; end group: methacryloyl group; number-average molecular weight: 6,000;) available from Toagosei Co., Ltd.
*3: NK ESTER M-90G: Methoxy polyethylene glycol monomethacrylate "NK ESTER M-90G" (tradename; average molar number of addition of ethyleneoxide: 9) available from Shin-Nakamura Chemical Co., Ltd.

**TABLE 1**

| Synthesis Examples | | | 1 | 2 | 3 | 4 | 5 | 6 |
|---|---|---|---|---|---|---|---|---|
| Kind of polymer | | | P-1 | P-2 | P-3 | P-4 | P-5 | P-6 |
| Composition charged (g)^{*1} | Component (a-1) | Acrylic acid | 32 | | 32 | 19 | 42 | 100 |
| | Component (a-2) | Styrene | 63 | 59 | | 76 | 53 | |
| | | α-Methyl styrene | 5 | 5 | | 5 | 5 | |
| | | Benzyl acrylate | | | 68 | | | |
| | | AS-6S^{*2} | | 18 | | | | |
| | Component (a-3) | NK ESTER M-90G^{*3} | | 18 | | | | |
| | Solvent | Methyl ethyl ketone | 100 | 100 | 100 | 100 | 100 | 100 |
| | Polymerization initiator | V-65 | 1 | 1 | 1 | 1 | 1 | 1 |
| | Polymerization chain transfer agent | 2-Mercaptopropionic acid | 0.5 | 0.5 | 0.5 | 0.5 | 0.5 | 0.5 |
| Properties | Acid value (mgKOH/g) | | 235 | 0 | 231 | 140 | 310 | 734 |
| | Number-average molecular weight | | 4100 | 4100 | 4500 | 4100 | 4600 | 4500 |

### Synthesis Example 7 (Synthesis of Polymer (P-7))

A 10 L four-necked flask equipped with a thermometer, a stainless steel stirring bar, a flow-down type condenser and a nitrogen inlet tube was charged with BPA-PO, fumaric acid, tin (II) di(2-ethyl hexanoate) (esterification catalyst) and 4-*tert*-butyl catechol (radical polymerization inhibitor) as shown in Table 2, and the contents of the flask were heated to 210°C in a nitrogen atmosphere in a mantle heater over 10 hours. Thereafter, the contents of the flask were reacted 210°C for 1 hour, and the reaction was further continued until the acid value of the resulting polymer as measured under 40 kPa reached the value shown in Table 2, thereby obtaining a polymer (P-7) (acid value: 24 mgKOH/g; number-average molecular weight: 3,100).

Incidentally, the polymers (P-1) to (P-7) obtained in Synthesis Examples 1 to 7, respectively, could be used as any of the polymer dispersant (a) and the polymer (b).

**TABLE 2**

| Synthesis Examples | | | 7 |
|---|---|---|---|
| Kind of polymer | | | P-7 |
| Composition charged (g) | Alcohol component | BPA-PO^{*1} | 3718 |
| | Carboxylic acid component | Fumaric acid | 1282 |
| | Esterification catalyst | Tin (II) di(2-ethyl hexanoate) | 25 |
| | Radical polymerization inhibitor | 4-*tert*-Butyl catechol | 0.25 |
| Properties, etc. | Yield [% by mass] | | 99 |
| | Acid value (mgKOH/g) | | 24 |
| | Number-average molecular weight [g/mol] | | 3100 |

| | | | |
|---|---|---|---|
| Note 1*: Polyoxypropylene (2.2)-2,2-bis(4-hydroxyphenyl)propane | | | |

### <Preparation of Polymer Emulsions (EM-1) to (EM-10)>

### Preparation Example 1

Fifty grams of the polymer (P-1) obtained in Synthesis Example 1 were mixed with 50 g of ion-exchanged water, and further mixed with sodium hydroxide available from Wako Pure Chemical Industries, Ltd., to neutralize the polymer such that the equivalent amount of the neutralizing agent used was 60 mol%. Next, a reaction vessel filled with the resulting mixture was hermetically closed, and the mixture was heated to 90°C in a warm water bath and then stirred for 3 hours while maintaining the mixture at 90°C, followed by cooling the mixture to room temperature to thereby disperse the polymer in water. Then, the resulting emulsion was mixed with ion-exchanged water to control a concentration of the emulsion to a desired value, thereby obtaining a polymer emulsion (EM-1) (cumulant average particle size: 53 nm; solid content: 50%).

### Preparation Examples 2 to 6, 8 and 9

The same procedure as in Preparation Example 1 was repeated except that the composition charged was changed to those shown in Table 3, thereby obtaining polymer emulsions (EM-2) to (EM-6), (EM-8) and (EM-9).

Meanwhile, in Preparation Examples 2 and 6, the polymer emulsions (EM-2) and (EM-6) were obtained without using any neutralizing agent.

### Preparation Example 7

A 3 L-capacity container equipped with a stirrer, a reflux condenser, a dropping funnel, a thermometer and a a nitrogen inlet tube was charged with 50 g of the polymer (P-7) obtained in Synthesis Example 7 and 50 g of methyl ethyl ketone, and the contents of the container were stirred at 30°C for 2 hours to dissolve the polymer (P-7) in methyl ethyl ketone. The resulting solution was mixed with a 5% sodium hydroxide aqueous solution such that the equivalent amount of the neutralizing agent used was 80 mol%, followed by stirring the obtained mixture for 30 minutes.

While maintaining the mixture at 60°C and stirring the mixture at a stirring velocity of 280 r/min (stirring peripheral speed: 88 m/min), 100 g of ion-exchanged water was added thereto over 100 minutes to subject the mixture to phase inversion emulsification. Thereafter, the resulting emulsion was heated to 73°C at which methyl ethyl ketone and water were distilled off from the emulsion under reduced pressure. When the solid content of the emulsion reached 50%, the application of the reduced pressure to the reaction system was stopped, and the emulsion was cooled to an ordinary temperature, thereby obtaining a polymer emulsion (EM-7) (cumulant average particle size: 65 nm; solid content: 50%).

### Preparation Example 10

In a 500 mL-capacity glass beaker, 50 g of the polymer (P-1), 50 g of ion-exchanged water and 10 g (in terms of solid components) of an anionic surfactant "EMAL E27C" (sodium polyoxyethylene laurylethersulfate; solid content: 27%) available from Kao Corporation were mixed with each other, and the contents of the beaker were heated to 98°C. Then, while maintaining the resulting mixture at 98°C, the mixture was subjected to dispersion treatment using an ultrasonic homogenizer "UP-400S" (tradename) available from Dr. Hielscher GmbH at an output of 200 W for 20 minutes. Thereafter, the resulting dispersion was cooled to 60°C at which ion-exchanged water was distilled off from the dispersion under reduced pressure. When the solid content of the dispersion reached 50%, the application of the reduced pressure to the reaction system was stopped, and the dispersion was cooled to an ordinary temperature, thereby obtaining a polymer emulsion (EM-10) (cumulant average particle size: 102 nm; solid content: 50%).

**TABLE 3**

| Preparation Examples | | | 1 | 2 | 3 | 4 | 5 | 6 | 7 | 8 | 9 | 10 |
|---|---|---|---|---|---|---|---|---|---|---|---|---|
| Polymer emulsion | | | EM-1 | EM-2 | EM-3 | EM-4 | EM-5 | EM-6 | EM-7 | EM-8 | EM-9 | EM-10 |
| Composition charged | Polymer | Kind | P-1 | P-2 | P-3 | P-4 | P-5 | P-6 | P-7 | P-1 | P-1 | P-1 |
| | | g | 50 | 50 | 50 | 50 | 50 | 50 | 50 | 50 | 50 | 50 |
| | Ion -exchanged water | g | 50 | 50 | 50 | 50 | 50 | 50 | 50 | 50 | 50 | 50 |
| | Equivalent amount of neutralizing agent used | mol% | 60 | 0 | 70 | 80 | 40 | 0 | 80 | 25 | 85 | 0 |
| | Anionic surfactant | g | - | - | - | - | - | - | - | - | - | 10 |
| Cumulant average particle size | | nm | 53 | 58 | 60 | 52 | 64 | *1 | 65 | 204 | 21 | 102 |
| Solid content | | % by mass | 50 | 50 | 50 | 50 | 50 | 50 | 50 | 50 | 50 | 50 |

| | | | | | | | | | | | | |
|---|---|---|---|---|---|---|---|---|---|---|---|---|
| Note *1- Since the polymer was dissolved in water, measurement of the cumulant average particle size was not conducted. | | | | | | | | | | | | |

### <Production of Water-Based Pigment Dispersions (A1) to (A11) and (AC1)>

### Production Example 1

A 1 L-capacity polyethylene beaker was charged with 25 g (in terms of solid components) of the polymer emulsion (EM-1) as the emulsion of the polymer dispersant (a), 25 g of methyl ethyl ketone, 50 g of a cyan pigment "TGR-SD" (tradename; C.I. Pigment Blue 15:3) available from DIC Corporation and 200 g of ion-exchanged water, to prepare a pigment mixture. Then, the thus prepared pigment mixture was stirred at 20°C for 3 hours using a disper "ULTRA DISPER" (tradename) available from Asada Iron Works Co., Ltd., while operating a disper blade thereof at a rotating speed of 6,000 rpm to subject the pigment mixture to preliminary dispersion treatment. Thereafter, the resulting mixture was further subjected to substantial dispersion treatment under a pressure of 150 MPa using a "Microfluidizer" (tradename) available from Microfluidics Corporation by passing the mixture through the device 15 times to thereby obtain a dispersion.

The thus obtained dispersion was mixed with ion-exchanged water and stirred, and then allowed to stand at 60°C under reduced pressure to remove methyl ethyl ketone therefrom and thereby control a solid content of the dispersion to 25%. Then, the resulting solution was charged into a 500 mL angle rotor, and subjected to centrifugal separation using a high-speed cooling centrifuge "himac CR22G" (temperature set: 20°C) available from Hitachi Koki Co., Ltd., at 3,660 rpm for 20 minutes. Thereafter, the resulting liquid layer portion was subjected to filtration treatment through a 5 µm membrane filter "Minisart" (tradename) available from Sartorius Inc., and then ion-exchanged water was added to the obtained filtered product to control a concentration thereof to a desired value, thereby obtaining a water-based pigment dispersion (A1) having a solid content of 20%.

### Production Examples 2 to 11

The same procedure as in Production Example 1 was repeated except that the kind and amount of the emulsion of the polymer dispersant (a) compounded were changed to those shown in Table 4, thereby obtaining water-based pigment dispersions (A2) to (A11).

### Comparative Production Example 1

A 1 L-capacity polyethylene beaker was charged with 25 g (in terms of solid components) of "LATEMUL E-118B" (tradename; sodium polyoxyethylenealkylethersulfate; solid content: 26%) available from Kao Corporation, 50 g of a cyan pigment "TGR-SD" (tradename; C.I. Pigment Blue 15:3) available from DIC Corporation and 200 g of ion-exchanged water, and the contents of the beaker were stirred at 20°C for 3 hours using a disper "ULTRA DISPER" (tradename) available from Asada Iron Works Co., Ltd., while operating a disper blade thereof at a rotating speed of 6,000 rpm, thereby obtaining a water-based pigment dispersion (AC1).

**TABLE 4**

| | | Dispersion (A) | Pigment | | Emulsion of dispersant (a) | | | Mass ratio [pigment/ dispersant (a)] |
|---|---|---|---|---|---|---|---|---|
| | | No. | Kind | Amount compounded (g) | Kind | Amount compounded (g)^{*1} | Neutralization degree (mol%) | |
| Production Examples | 1 | A1 | TGR-SD | 50 | EM-1 | 25 | 60 | 2 |
| | 2 | A2 | TGR-SD | 50 | EM-2 | 25 | 0 | 2 |
| | 3 | A3 | TGR-SD | 50 | EM-3 | 25 | 70 | 2 |
| | 4 | A4 | TGR-SD | 50 | EM-4 | 25 | 80 | 2 |
| | 5 | A5 | TGR-SD | 50 | EM-5 | 25 | 40 | 2 |
| | 6 | A6 | TGR-SD | 50 | EM-6 | 25 | 0 | 2 |
| | 7 | A7 | TGR-SD | 50 | EM-7 | 25 | 80 | 2 |
| | 8 | A8 | TGR-SD | 50 | EM-8 | 25 | 25 | 2 |
| | 9 | A9 | TGR-SD | 50 | EM-9 | 25 | 85 | 2 |
| | 10 | A10 | TGR-SD | 50 | EM-10 | 25 | 0 | 2 |
| | 11 | A11 | TGR-SD | 50 | EM-1 | 10 | 60 | 5 |
| Comparative Production Example | 1 | AC1 | TGR-SD | 50 | (E-118B) | 25 | - | 2 |

| | | | | | | | | |
|---|---|---|---|---|---|---|---|---|
| Note *1- The amount of the dispersant (a) compounded was an amount of solid components contained therein. | | | | | | | | |

### <Production of Inks 1-1 to 1-23 and 1-C1 to 1-C4>

### Example 1-1

### (Step 1-1 and Step 1-1-2)

A threaded neck glass bottle was charged with 100 g of the water-based pigment dispersion (A1) (containing 13.3% of the pigment and 6.7% of the polymer dispersant (a) in 20% of solid components therein), and then 6.7 g (in terms of solid components; 2.5 g per 5 g of the pigment) of the polymer emulsion (EM-1) as the emulsion of the polymer (b) as well as trimethylolpropane polyglycidyl ether "DENACOL EX-321LT" (tradename; epoxy value: 140) as a crosslinking agent available from Nagase ChemteX Corporation in such an amount that the crosslinking degree was 60 mol% were further added to the glass bottle to thereby obtain a mixture (C-1).

The glass bottle was hermetically sealed with a cap, and the mixture (C-1) therein was heated at 90°C for 1.5 hours while stirring with a magnetic stirrer. Next, the contents of the glass bottle were cooled to room temperature (25°C), and then subjected to filtration treatment using a 25 mL-capacity needleless syringe available from Terumo Corporation fitted with the aforementioned 5 µm-mesh filter, thereby obtaining a mixture (C'-1) subjected to the crosslinking treatment.

### (Concentration Step)

The resulting mixture (C'-1) was allowed to stand at 60°C under reduced pressure to remove ion-exchanged water from the mixture and thereby concentrate the mixture until the mass ratio of the pigment to water [pigment/water] in the mixture became 0.5.

### (Step 1-2)

The thus concentrated mixture (C'-1) was cooled to room temperature (25°C), and then 2-hydroxyethyl acrylate (HEA; guaranteed reagent) available from Tokyo Chemical Industry Co., Ltd., was gradually added thereto while stirring the mixture with a magnetic stirrer to control the contents of the pigment and water in the resulting ink to 5% by mass and 10% by mass, respectively, thereby obtaining an ink 1-1 having a pH value of 6.8 and a viscosity of 5.02 mPa•s as measured at 32°C.

### Examples 1-2 to 1-6 and 1-10 to 1-23

The same procedure in Example 1-1 was repeated except that the composition of the respective components compounded was changed to those shown Table 5, thereby obtaining respective inks.

Meanwhile, in Example 1-6, the crosslinking agent was changed to glycerol polyglycidyl ether "EX-313LT" (tradename; epoxy value: 141) available from Nagase ChemteX Corporation, and in Example 1-14, the crosslinking agent was changed to polyglycerol polyglycidyl ether "EX-512LT" (tradename; epoxy value: 168) available from Nagase ChemteX Corporation.

In addition, in Example 1-12, the polymerizable monomer (i) was changed to an EO-modified glycerin triacrylate (A-GLY-20E; average molar number of addition of EO: 20 mol) available from Shin-Nakamura Chemical Co., Ltd., and in Example 1-13, the polymerizable monomer (i) was changed to 2-hydroxyethyl methacrylate (HEMA) available from Tokyo Chemical Industry Co., Ltd.

### Example 1-7

### (Concentration Step)

One hundred grams of the water-based pigment dispersion (A1) (containing 13.3% of the pigment and 6.7% of the polymer dispersant (a) in 20% of solid components therein) were allowed to stand at 60°C under reduced pressure to remove ion-exchanged water from the pigment dispersion and thereby concentrate the pigment dispersion until the mass ratio of the pigment to water [pigment/water] in the pigment dispersion became 0.5.

### (Step 1-1 and Step 1-1-2)

The thus concentrated water-based pigment dispersion (A1) was transferred into a threaded neck glass bottle, and then 6.7 g (in terms of solid components; 2.5 g per 5 g of the pigment) of the polymer emulsion (EM-1) as the emulsion of the polymer (b) as well as trimethylolpropane polyglycidyl ether "DENACOL EX-321LT" as a crosslinking agent in such an amount that the crosslinking degree was 60 mol% were further added to the glass bottle to thereby obtain a mixture (C-7).

The glass bottle was hermetically sealed with a cap, and the mixture (C-7) therein was heated at 90°C for 1.5 hours while stirring with a magnetic stirrer. Next, the contents of the glass bottle were cooled to room temperature (25°C), and then subjected to filtration treatment using a 25 mL-capacity needleless syringe available from Terumo Corporation fitted with the aforementioned 5 µm-mesh filter, thereby obtaining a mixture (C'-7) subjected to the crosslinking treatment.

### (Step 1-2)

While stirring the resulting mixture (C'-7) with a magnetic stirrer, 2-hydroxyethyl acrylate (HEA) was gradually added thereto to control the contents of the pigment and water in the resulting ink to 5% by mass and 10% by mass, respectively, thereby obtaining an ink 1-7.

### Example 1-8

### (Step 1-1 and Step 1-1-2)

A threaded neck glass bottle was charged with 100 g of the water-based pigment dispersion (A1) (containing 13.3% of the pigment and 6.7% of the polymer dispersant (a) in 20% of solid components therein), and separately 6.7 g (in terms of solid components; 2.5 g per 5 g of the pigment) of the polymer emulsion (EM-1) as well as trimethylolpropane polyglycidyl ether "DENACOL EX-321LT" as a crosslinking agent in such an amount that the crosslinking degree was 60 mol% were further added to the glass bottle to thereby obtain a mixture (C-8).

The glass bottle was hermetically sealed with a cap, and the mixture (C-8) therein was heated at 90°C for 1.5 hours while stirring with a magnetic stirrer. Next, the contents of the glass bottle were cooled to room temperature (25°C), and then subjected to filtration treatment using a 25 mL-capacity needleless syringe available from Terumo Corporation fitted with the aforementioned 5 µm-mesh filter, thereby obtaining a mixture (C'-8) subjected to the crosslinking treatment.

### (Step 1-2)

While stirring the resulting mixture (C'-8) with a magnetic stirrer, hydroxyethyl acrylate (HEA) was gradually added thereto, followed by mixing the obtained mixture.

### (Concentration Step)

Thereafter, the resulting mixture was allowed to stand at 60°C under reduced pressure to remove ion-exchanged water from the mixture and concentrate the mixture until the mass ratio of the pigment to water [pigment/water] in the mixture became 0.5, thereby obtaining an ink 1-8 having a pigment content of 5% by mass and a water content of 10% by mass.

### Example 1-9

### (Step 1-1 and Step 1-1-1)

A threaded neck glass bottle was charged with 100 g of the water-based pigment dispersion (A1) (containing 13.3% of the pigment and 6.7% of the polymer in 20% of solid components therein), and then trimethylolpropane polyglycidyl ether "DENACOL EX-321LT" as a crosslinking agent in such an amount that the crosslinking degree was 60 mol% was further added to the glass bottle. The glass bottle was hermetically sealed with a cap, and the contents of the glass bottle were heated at 90°C for 1.5 hours while stirring with a magnetic stirrer. Next, the contents of the glass bottle were cooled to room temperature (25°C), thereby obtaining a water-based pigment dispersion (A'1) subjected to the crosslinking treatment.

Then, 6.7 g (in terms of solid components; 2.5 g per 5 g of the pigment) of the polymer emulsion (EM-1) as the emulsion of the polymer (b) was added to and mixed in the thus obtained water-based pigment dispersion (A'1), and the resulting mixture was subjected to filtration treatment using a 25 mL-capacity needleless syringe available from Terumo Corporation fitted with the aforementioned 5 µm-mesh filter, thereby obtaining a mixture (C-9).

### (Concentration Step)

Next, the resulting mixture was allowed to stand at 60°C under reduced pressure to remove ion-exchanged water from the mixture and thereby concentrate the mixture until the mass ratio of the pigment to water [pigment/water] in the mixture became 0.5, followed by cooling the mixture to room temperature (25°C).

### (Step 1-2)

While stirring the thus concentrated mixture (C-9) with a magnetic stirrer, 2-hydroxyethyl acrylate (HEA) was gradually added thereto to control the contents of the pigment and water in the resulting ink to 5% by mass and 10% by mass, respectively, thereby obtaining an ink 1-9.

### Comparative Examples 1-1 to 1-4

The same procedure in Example 1-1 was repeated except that the composition of the respective components compounded was changed to those shown Table 6, thereby obtaining inks 1-C1 to 1-C4.

### <Ink-Jet Printing by Irradiation with Electron Beam>

Using the resulting inks 1-1 to 1-23 and 1-C1 to 1-C4, ink-jet printing was conducted by the following method to evaluate ejection stability and gloss according to the following evaluation methods. The results are shown in Tables 5 and 6.

### (Step 1)

Under the environmental conditions of a temperature of 25±1°C and a relative humidity of 30±5%, the respective inks were loaded into an ink-jet print evaluation apparatus available from Trytech Co., Ltd., equipped with an ink-jet print head "KJ4B-QA06NTB-STDV" (piezoelectric type; number of nozzles: 2656) available from Kyocera Corporation.

The printing conditions were set to a print head-applied voltage of 26 V, a frequency of 20 kHz, an ejected ink droplet amount of 18 pL, a print head temperature of 32°C, a resolution of 600 dpi, the number of ink shots for flushing before being ejected of 200 shots and a negative pressure of -4.0 kPa, and a printing medium was fixed under vacuum on a transportation table such that the longitudinal direction of the printing medium was aligned with a transportation direction thereof. A printing command was transmitted to the aforementioned print evaluation apparatus to adhere the ink onto the printing medium so as to form a Duty 100% image thereon. Thereafter, the ink on the printing medium was heated and dried on a hot plate at 60°C for 2 minutes.

Incidentally, a polyester film "LUMIRROR T60" having a thickness of 75 µm available from Toray Industries Inc., was used as the printing medium. In addition, the amount of the ink adhered after being dried was 502 mg/m².

### (Step II)

Using an electron beam irradiation apparatus "EZCure Custom" available from Iwasaki Electric Co., Ltd., an electric beam was irradiated onto the ink adhered onto the printing medium in the step I at an accelerated voltage of 80 kV, an irradiation dose of 50 kGy and a transportation speed of 25 m/min in a one-pass mode to cure the ink, thereby obtaining a printed material.

### [Evaluation]

### (1) Evaluation of Ejection Stability

After carrying out the image printing using the aforementioned ink-jet print evaluation apparatus, the ink-jet print evaluation apparatus was allowed to stand for 30 minutes without protecting an ink-jet nozzle face of the print head thereof. Then, a print check pattern that was capable of judging ejection or non-ejection of the ink from all of nozzles was printed on a printing medium, and the number of missing nozzles (the number of clogged nozzles from which the ink could not be normally ejected) was counted to evaluate ejection stability of the ink. The less the number of the missing nozzles becomes, the more excellent the ejection stability of the ink is.

### (2) Evaluation of Gloss

The Duty 100% image printed material obtained above was allowed to stand in an environmental test chamber maintained at a relative humidity of 50% for one day. Thereafter, the printed material was placed on a KP cut paper available from Kokusai Pulp & Paper Co., Ltd., such that the printed surface thereof faced upward, to measure a degree of glossiness of an elliptic area (3 mm x 6 mm) on the printed surface to be measured at an incident angle of 60°C using a gloss meter "IG-300" available from Horiba Ltd. The larger the measured glossiness value, the more excellent the gloss of the ink.

**TABLE 5-1: Ink-Jet Printing by Irradiation with Electron Beam**

| Examples | Ink | Dispersion (A) | Pigment | Polymer (a) | Emulsion of polymer (b) | | Crosslinking agent | | Crosslinking degree |
|---|---|---|---|---|---|---|---|---|---|
| | No. | No. | Content (% by mass)^{*1} | Content (% by mass)^{*1} | Kind | Content (% by mass)^{*1} | Kind | Content (% by mass)^{*1} | (mol%) |
| 1-1 | 1-1 | A1 | 5 | 2.5 | EM-1 | 2.5 | EX-321LT | 1.8 | 60 |
| 1-2 | 1-2 | A2 | 5 | 2.5 | EM-2 | 2.5 | - | 0 | 0 |
| 1-3 | 1-3 | A6 | 5 | 2.5 | EM-6 | 2.5 | EX-321LT | 5.5 | 60 |
| 1-4 | 1-4 | A10 | 5 | 2.1 | EM-10 | 2.5 | EX-321LT | 1.8 | 65 |
| 1-5 | 1-5 | A1 | 5 | 2.5 | EM-1 | 2.5 | - | 0 | 0 |
| 1-6 | 1-6 | A1 | 5 | 2.5 | EM-1 | 2.5 | EX-313LT | 1.8 | 60 |
| 1-7 | 1-7 | A1 | 5 | 2.5 | EM-1 | 2.5 | EX-321LT | 1.8 | 60 |
| 1-8 | 1-8 | A1 | 5 | 2.5 | EM-1 | 2.5 | EX-321LT | 1.8 | 60 |
| 1-9 | 1-9 | A1 | 5 | 2.5 | EM-1 | 2.5 | EX-321LT | 1.8 | 60 |
| 1-10 | 1-10 | A1 | 5 | 2.5 | EM-1 | 5 | EX-321LT | 2.6 | 60 |
| 1-11 | 1-11 | A11 | 5 | 1 | EM-1 | 0.5 | EX-321LT | 0.5 | 60 |
| 1-12 | 1-12 | A1 | 5 | 2.5 | EM-1 | 2.5 | EX-321LT | 1.8 | 60 |

**TABLE 5-2: Ink-Jet Printing by Irradiation with Electron Beam**

| Examples | Mass ratio [pigment/ whole solid components]^{*2} | Water | Polymerizable monomer (i) | | No. of method for production of ink^{*3} | Evaluation | |
|---|---|---|---|---|---|---|---|
| | | Content (% by mass)^{*1} | Kind | Content (% by mass)^{*1} | | Ejection stability | Gloss |
| 1-1 | 0.42 | 10 | HEA | 78.2 | 1 | 0 | 98 |
| 1-2 | 0.50 | 10 | HEA | 80.0 | 1 | 24 | 68 |
| 1-3 | 0.32 | 10 | HEA | 74.5 | 1 | 27 | 65 |
| 1-4 | 0.44 | 10 | HEA | 78.6 | 1 | 24 | 68 |
| 1-5 | 0.50 | 10 | HEA | 80.0 | 1 | 21 | 78 |
| 1-6 | 0.42 | 10 | HEA | 78.2 | 1 | 24 | 73 |
| 1-7 | 0.42 | 10 | HEA | 78.2 | 2 | 18 | 81 |
| 1-8 | 0.42 | 10 | HEA | 78.2 | 3 | 20 | 79 |
| 1-9 | 0.42 | 10 | HEA | 78.2 | 4 | 18 | 83 |
| 1-10 | 0.33 | 10 | HEA | 74.9 | 1 | 3 | 97 |
| 1-11 | 0.71 | 10 | HEA | 83.0 | 1 | 16 | 84 |
| 1-12 | 0.42 | 10 | A-GLY-20E | 78.2 | 1 | 9 | 86 |

**TABLE 5-3: Ink-Jet Printing by Irradiation with Electron Beam**

| Examples | Ink | Dispersion (A) | Pigment | Polymer (a) | Emulsion of polymer (b) | | Crosslinking agent | | Crosslinking degree |
|---|---|---|---|---|---|---|---|---|---|
| | No. | No. | Content (% by mass)^{*1} | Content (% by mass)^{*1} | Kind | Content (% by mass)^{*1} | Kind | Content (% by mass)^{*1} | (mol%) |
| 1-13 | 1-13 | A1 | 5 | 2.5 | EM-1 | 2.5 | EX-321LT | 1.8 | 60 |
| 1-14 | 1-14 | A1 | 5 | 2.5 | EM-1 | 2.5 | EX-512LT | 2.1 | 60 |
| 1-15 | 1-15 | A3 | 5 | 2.5 | EM-3 | 2.5 | EX-321LT | 1.7 | 60 |
| 1-16 | 1-16 | A7 | 5 | 2.5 | EM-7 | 2.5 | EX-321LT | 0.2 | 60 |
| 1-17 | 1-17 | A4 | 5 | 2.5 | EM-4 | 2.5 | EX-321LT | 1.0 | 60 |
| 1-18 | 1-18 | A5 | 5 | 2.5 | EM-5 | 2.5 | EX-321LT | 2.3 | 60 |
| 1-19 | 1-19 | A8 | 5 | 2.5 | EM-8 | 2.5 | EX-321LT | 1.8 | 60 |
| 1-20 | 1-20 | A9 | 5 | 2.5 | EM-9 | 2.5 | EX-321LT | 1.8 | 60 |
| 1-21 | 1-21 | A1 | 5 | 2.5 | EM-1 | 2.5 | EX-321LT | 0.4 | 15 |
| 1-22 | 1-22 | A1 | 5 | 2.5 | EM-1 | 2.5 | EX-321LT | 2.5 | 85 |
| 1-23 | 1-23 | A1 | 5 | 2.5 | EM-1 | 2.5 | EX-321LT | 1.8 | 60 |

**TABLE 5-4: Ink-Jet Printing by Irradiation with Electron Beam**

| Examples | Mass ratio [pigment/ whole solid components]^{*2} | Water | Polymerizable monomer (i) | | No. of method for production of ink^{*3} | Evaluation | |
|---|---|---|---|---|---|---|---|
| | | Content (% by mass)^{*1} | Kind | Content (% by mass)^{*1} | | Ejection stability | Gloss |
| 1-13 | 0.42 | 10 | HEMA | 78.2 | 1 | 12 | 85 |
| 1-14 | 0.41 | 10 | HEA | 77.9 | 1 | 21 | 87 |
| 1-15 | 0.43 | 10 | HEA | 78.3 | 1 | 15 | 85 |
| 1-16 | 0.49 | 10 | HEA | 79.8 | 1 | 12 | 88 |
| 1-17 | 0.45 | 10 | HEA | 79.0 | 1 | 10 | 91 |
| 1-18 | 0.41 | 10 | HEA | 77.7 | 1 | 8 | 93 |
| 1-19 | 0.42 | 10 | HEA | 78.2 | 1 | 8 | 87 |
| 1-20 | 0.42 | 10 | HEA | 78.2 | 1 | 7 | 93 |
| 1-21 | 0.48 | 10 | HEA | 79.6 | 1 | 4 | 98 |
| 1-22 | 0.40 | 10 | HEA | 77.5 | 1 | 6 | 95 |
| 1-23 | 0.42 | 55 | HEA | 33.2 | 1 | 23 | 71 |

**TABLE 6-1: Ink-Jet Printing by Irradiation with Electron Beam**

| Comparative Examples | Ink | Dispersion (A) | Pigment | Polymer (a) | Emulsion of polymer (b) | | Crosslinking agent | | Crosslinking degree |
|---|---|---|---|---|---|---|---|---|---|
| | No. | No. | Content (% by mass)^{*1} | Content (% by mass)^{*1} | Kind | Content (% by mass)^{*1} | Kind | Content (% by mass)^{*1} | (mol%) |
| 1-1 | 1-C1 | A1 | 5 | 2.5 | EM-1 | 2.5 | EX-321LT | 1.8 | 60 |
| 1-2 | 1-C2 | A1 | 5 | 2.5 | EM-1 | 2.5 | EX-321LT | 1.8 | 60 |
| 1-3 | 1-C3 | AC1 | 5 | 0 | EM-1 | 2.5 | EX-321LT | 0.9 | 60 |
| 1-4 | 1-C4 | A1 | 5 | 2.5 | EM-1 | 2.5 | EX-321LT | 1.8 | 60 |

**TABLE 6-2: Ink-Jet Printing by Irradiation with Electron Beam**

| Comparative Examples | Mass ratio [pigment/ whole solid components]^{*2} | Water | Polymerizable monomer (i) | | No. of method for production of ink^{*3} | Evaluation | |
|---|---|---|---|---|---|---|---|
| | | Content (% by mass)^{*1} | Kind | Content (% by mass)^{*1} | | Ejection stability | Gloss |
| 1-1 | 0.42 | 8 | HEA | 80.2 | 1 | 68 | 19 |
| 1-2 | 0.42 | 75 | HEA | 13.2 | 1 | 72 | 15 |
| 1-3 | 0.60 | 10 | HEA | 81.6 | 1 | 61 | 21 |
| 1-4 | 0.42 | 65 | HEA | 23.2 | 1 | 61 | 25 |

The respective notations shown in Tables 5 and 6 are as follows.
*1: Contents (% by mass) of respective components in the ink. Incidentally, the content of the emulsion of the polymer (b) is the value in terms of a solid content of the emulsion.
*2: Mass ratio of the pigment to whole solid components [pigment/whole solid components] in the ink.
*3: The kinds of methods for production of the ink (the sequential order of steps) are shown below.
Method 1: (Step 1-1 and step 1-1-2) → (concentration step) → (step 1-2);
Method 2: (Concentration step) → (step 1-1 and step 1-1-2) → (step 1-2);
Method 3: (Step 1-1 and step 1-1-2) → (step 1-2) → (concentration step); and
Method 4: (Step 1-1 and step 1-1-1) → (concentration step) → (step 1-2).

### <Production of Inks 2-1-to 2-9 and 2-C1 to 2-C4>

### Example 2-1

One hundred parts by mass of the ink 1-1 obtained in Example 1-1 as a raw material ink were mixed with 5 parts by mass of a photopolymerization initiator "IRGACURE 907" (2-methyl-4'-(methylthio)-2-morpholinopropiophenone) distributed by Sigma Aldrich Inc., and the resulting mixture was completely dissolved by stirring it with a magnetic stirrer, thereby obtaining an ink 2-1.

### Examples 2-2 to 2-9 and Comparative Examples 2-1 to 2-4

The same procedure as in Example 2-1 was repeated except that the ink 1-1 as the raw material ink was replaced with those inks shown in Table 7, thereby obtaining inks 2-2 to 2-9 and 2-C1 to 2-C4.

### <Ink-Jet Printing by Irradiation with Ultraviolet Ray>

Using the resulting inks 2-1 to 2-9 and 2-C1 to 2-C4, ink-jet printing was conducted by the following method to evaluate ejection stability and gloss thereof according to the same evaluation methods as described above. The results are shown in Table 7.

The same procedure as in the aforementioned ink-jet printing by irradiation with an electron beam was repeated except that the ink loaded to the aforementioned ink-jet print evaluation apparatus in the step I was replaced with the respective inks 2-1 to 2-9 and 2-C1 to 2-C4, and further the electron beam irradiation apparatus used in the step II was replaced with an ultraviolet ray irradiation apparatus "Light Hammer 6 Mark II" (tradename) available from Heraeus K.K., and an ultraviolet ray was irradiated using an H valve (having spectral peaks at a wavelength of 254 nm, 313 nm and 365 nm) at an output of 200 W/cm and a transportation speed of 25 m/min in one-pass mode to cure the respective inks, thereby obtaining printed materials.

**TABLE 7: Ink-Jet Printing by Irradiation with Ultraviolet Ray**

| | | Ink | Raw material ink | Evaluation | |
|---|---|---|---|---|---|
| | | No. | Kind | Ejection stability | Gloss |
| Examples | 2-1 | 2-1 | Ink 1-1 | 0 | 88 |
| | 2-2 | 2-2 | Ink 1-23 | 25 | 71 |
| | 2-3 | 2-3 | Ink 1-12 | 10 | 84 |
| | 2-4 | 2-4 | Ink 1-13 | 15 | 80 |
| | 2-5 | 2-5 | Ink 1-10 | 5 | 93 |
| | 2-6 | 2-6 | Ink 1-11 | 19 | 77 |
| | 2-7 | 2-7 | Ink 1-7 | 22 | 75 |
| | 2-8 | 2-8 | Ink 1-8 | 26 | 74 |
| | 2-9 | 2-9 | Ink 1-9 | 21 | 80 |
| Comparative Examples | 2-1 | 2-C1 | Ink 1-C1 | 70 | 15 |
| | 2-2 | 2-C2 | Ink 1-C2 | 76 | 14 |
| | 2-3 | 2-C3 | Ink 1-C3 | 66 | 18 |
| | 2-4 | 2-C4 | Ink 1-C4 | 68 | 20 |

From Tables 5 to 7, it was confirmed that the inks obtained in the Examples of the present invention contained not less than 8.5% by mass and not more than 65% by mass of water as well as not less than 30% by mass of the polymerizable monomer (i), and further contained the pigment dispersed with the polymer dispersant (a), and therefore were excellent in ejection stability and gloss as compared to the ink obtained in the Comparative Examples.

### Industrial Applicability

The ink of the present invention is capable of providing a printed material that is excellent in gloss, and therefore can be suitably used as an ink for flexographic printing, gravure printing or ink-jet printing. In particular, the ink of the present invention is excellent in ejection stability and capable of providing a printed material that can exhibit high gloss, and therefore can be suitably used as an ink for an ink-jet printing method.

## Claims

1. An ink that is cured by irradiation with an active energy ray, comprising:
not less than 8.5% by mass and not more than 65% by mass of a water-based medium;
not less than 30% by mass of a water-soluble active energy ray-polymerizable monomer (i); and
a pigment that is dispersed in the ink with a polymer dispersant (a).

2. The ink according to claim 1, wherein a mass ratio of the pigment to whole solid components [pigment/whole solid components] in the ink is not less than 0.1 and not more than 0.95.

3. The ink according to claim 1 or 2, wherein the active energy ray is an electron beam.

4. The ink according to any one of claims 1 to 3, wherein the polymer dispersant (a) comprises acid groups, and the acid groups are partially neutralized.

5. The ink according to claim 4, wherein a degree of neutralization of the acid group of the polymer dispersant (a) is not less than 10 mol% and not more than 90 mol%.

6. The ink according to claim 4 or 5, wherein an acid value of the polymer dispersant (a) is not less than 130 mgKOH/g and not more than 320 mgKOH/g.

7. The ink according to any one of claims 4 to 6, wherein the acid groups of the polymer dispersant (a) are partially crosslinked with a water-insoluble polyfunctional epoxy compound.

8. The ink according to any one of claims 1 to 7, wherein the polymer dispersant (a) is a vinyl-based polymer that comprises a constitutional unit derived from (a-1) a carboxy group-containing monomer and a constitutional unit derived from (a-2) a hydrophobic monomer.

9. The ink according to any one of claims 1 to 8, further comprising an emulsion of a polymer (b), in which a mass ratio of the polymer (b) to the polymer dispersant (a) [polymer (b)/polymer dispersant (a)] in the ink is not less than 0.1 and not more than 10.

10. The ink according to claim 9, wherein acid groups of the polymer (b) are partially crosslinked with the water-insoluble polyfunctional epoxy compound.

11. A process for producing an ink that is cured by irradiation with an active energy ray and comprises not less than 8.5% by mass and not more than 65% by mass of a water-based medium and not less than 30% by mass of a water-soluble active energy ray-polymerizable monomer (i), said process comprising the following step 1:
Step 1: mixing a water-based pigment dispersion (A) prepared by dispersing a pigment in the water-based medium with a polymer dispersant (a), and the water-soluble active energy ray-polymerizable monomer (i).

12. The process for producing an ink according to claim 11, wherein the step 1 comprises the following steps 1-1 and 1-2:
Step 1-1: mixing the water-based pigment dispersion (A) and an emulsion of a polymer (b) to obtain a mixture (C); and
Step 1-2: mixing the mixture (C) obtained in the step 1-1 and the water-soluble active energy ray-polymerizable monomer (i).

13. The process for producing an ink according to claim 12, wherein the step 1 further comprises the following step 1-1-1 or 1-1-2:
Step 1-1-1: subjecting the water-based pigment dispersion (A) to crosslinking treatment before mixing the water-based pigment dispersion (A) and the emulsion of the polymer (b) in the step 1-1; or
Step 1-1-2: subjecting the mixture (C) to crosslinking treatment after the step 1-1 but before the step 1-2.

14. An ink-jet printing method for printing characters or images on a printing medium using the ink according to any one of claims 1 to 10, said method comprising the following steps I and II:
Step I: allowing the ink to adhere to the printing medium in an ink-jet printing manner; and
Step II: irradiating an active energy ray to the ink adhered to the printing medium in the step I to cure the ink.
